# EUROPÄISCHE PATENTANMELDUNG

(11) **EP 4 847 543 A1**
(43) Veröffentlichungstag der Anmeldung: **02.12.2026**
(21) Anmeldenummer: 25179972.2
(22) Anmeldetag: 30.05.2025
(51) Int. Cl.: C08G 8/24, C08G 14/08, C09J 161/06, C09J 161/34, H01M 4/62, C08G 8/12

(54) **BINDEMITTELSYSTEM ENTHALTEND EINEN NOVOLAK FÜR DIE HERSTELLUNG EINER ELEKTRODE**

(71) Anmelder: HÜTTENES-ALBERTUS Chemische Werke Gesellschaft mit beschränkter Haftung, 40549 Düsseldorf (DE)
(72) Erfinder: Die Erfindernennung liegt noch nicht vor
(74) Vertreter: Eisenführ Speiser

(57) **Zusammenfassung**

Beschrieben wird ein Bindemittelsystem für die Herstellung einer Elektrode, insbesondere Kathode, für eine elektrochemische Zelle, wobei das Bindemittelsystem (a) ein Phenolharz aus der Gruppe der Novolake und (b) zum Vernetzen des Phenolharzes aus der Gruppe der Novolake ein Vernetzungsmittel umfasst.

## Beschreibung

Beschrieben werden
- ein Bindemittelsystem für die Herstellung einer Elektrode, insbesondere Kathode, für eine elektrochemische Zelle;
- die Verwendung des Bindemittelsystems zur Herstellung einer Elektrode, insbesondere Kathode, für eine elektrochemische Zelle bzw. zur Anbindung eines elektrochemisch aktiven Materials an einen Stromabnehmer einer Elektrode, insbesondere Kathode, für eine elektrochemische Zelle;
- eine Mischung zur Herstellung einer Elektrode, insbesondere Kathode, für eine elektrochemische Zelle;
- die Verwendung der Mischung zur Herstellung einer Elektrode, insbesondere Kathode, für eine elektrochemische Zelle;
- eine Elektrode, insbesondere Kathode, für eine elektrochemische Zelle;
- ein Verfahren zur Herstellung der Elektrode, insbesondere Kathode, für eine elektrochemische Zelle;
- und eine elektrochemische Zelle enthaltend diese Elektrode.

Elektrochemische Zellen, z.B. elektrochemische Zellen aus der Gruppe der Lithium-Ionen-Batterien und Natrium-Ionen-Batterien einschließlich wiederaufladbarer Batterien, enthalten zwei Elektroden, nämlich Anode und Kathode. Im Kontext der vorliegenden Beschreibung bezeichnet der Begriff Anode diejenige Elektrode, an der beim Entladen der elektrochemischen Zelle eine negative Ladung entsteht, und der Begriff Kathode diejenige Elektrode, an der beim Entladen der elektrochemischen Zelle eine positive Ladung entsteht. Elektroden elektrochemischer Zellen umfassen eine Aktivschicht enthaltend ein elektrochemisch aktives Material, d.h. ein Material, das beim Laden sowie beim Entladen der elektrochemischen Zelle jeweils seinen Oxidationszustand ändert, und ein elektrochemisch inaktives Bindemittel, welches Kohäsion innerhalb der Aktivschicht und Adhäsion der Aktivschicht am Stromabnehmer der Elektrode bewirkt. Im Kontext der vorliegenden Beschreibung bezeichnet der Begriff Anoden-Aktivmaterial ein elektrochemisch aktives Material, das beim Entladen der elektrochemischen Zelle oxidiert wird, und der Begriff Kathoden-Aktivmaterial ein elektrochemisch aktives Material, das beim Entladen der elektrochemischen Zelle reduziert wird. In jeder Elektrode ist die Aktivschicht üblicherweise in Kontakt mit einem Stromabnehmer, über den beim Laden der Zelle elektrischer Strom zugeführt bzw. beim Entladen der Zelle Strom abgeführt wird

Das Bindemittel für die Elektroden muss elektrochemisch inaktiv sein, d.h. es darf weder beim Laden noch beim Entladen der elektrochemischen Zelle seinen Oxidationszustand ändern. Im Stand der Technik werden als Bindemittel vorwiegend Fluorpolymere, insbesondere Polyvinylidenfluorid eingesetzt. Dies ist jedoch nachteilig, weil die Herstellung von Fluorpolymeren hohe Kosten und einen hohen technischen Aufwand erfordert, und weil die Verarbeitung von Fluorpolymeren durch deren geringe Löslichkeit und die eingeschränkte Auswahl anwendbarer Lösungsmittel wie z.B. das als gesundheitsschädlich eingestufte N-Methyl-2-pyrrolidon erschwert wird.

Somit besteht ein ständiger und wachsender Bedarf nach alternativen Bindemitteln für die Herstellung von Elektroden für elektrochemische Zellen, welche eine mindestens vergleichbare Bindewirkung und chemische Stabilität haben wie die im Stand der Technik eingesetzten Fluorpolymere, jedoch nicht deren Nachteile aufweisen.

US 2013/0323592 A1 offenbart ein Bindemittel für eine Elektrode einer Lithiumbatterie, eine Elektrode, die das Bindemittel enthält, und eine Lithiumbatterie, die das Bindemittel enthält. Die Elektrode ist insbesondere eine Anode enthaltend ein elektrochemisch aktives Material (Anoden-Aktivmaterial) ausgewählt aus der Gruppe bestehend aus Silicium-basierendem-Aktivmaterial, Zinn-basierendem Aktivmaterial, Silicium-Zinn-Legierung-basierendem Aktivmaterial, Silicium-Kohlenstoff-basierenden Aktivmaterial, und Graphit-basierendem Aktivmaterial. Das Bindemittel umfasst ein Epoxy-Phenolharz und ein Harz auf Kautschukbasis und soll die Verformung der Elektrode verhindern, wenn durch Lade- und Entladevorgänge eine Ausdehnung und Kontraktion des aktiven Materials einer Lithiumbatterie auftritt. Das Epoxy-Phenolharz soll Adhäsion und Zugfestigkeit bewirken und das Harz auf Kautschukbasis Elastizität. Das Epoxy-Phenolharz wird hergestellt durch katalytische Vernetzungsreaktion zwischen einem Epoxy-basierenden Harz und einem multifunktionalen Phenolharz in einem der Elektrodenherstellung vorausgehenden separaten Prozess. Auch das Harz auf Kautschukbasis wird in einem der Elektrodenherstellung vorausgehenden separaten Prozess hergestellt. Herstellung und Zusammensetzung des Bindemittels sind somit relativ komplex und aufwändig. US 2013/0323592 A1 offenbart auch eine Mischung in Form einer Suspension zur Herstellung einer Elektrode, wobei die Mischung das Bindemittel umfassend ein Epoxy-Phenolharz und ein Harz auf Kautschukbasis sowie ein Lösungsmittel und ein Anoden-Aktivmaterial enthält.

CN114583171A offenbart ein Adhäsiv für Elektroden von Lithiumbatterien, wobei das Adhäsiv umfasst:
20-40 Gew% Epoxidharz
10-18 Gew% Phenolharz
0,5 bis 3 Gew% Härtungsmittel
2 bis 4 Gew% Kupplungsmittel
15 bis 25 Gew% Füllstoff
0,5 bis Gew% Kohlenstoff-Nanoröhren
20-30 Gew% organisches Lösungsmittel.

Ausführungsbeispiele derartiger Adhäsive wurden verwendet, um zur Herstellung von Lithiumbatterien übliche Aktivmaterialien für die negative Elektrode (Anode) zu binden. Das Mischungsverhältnis zwischen Anoden-Aktivmaterial und Adhäsiv ist in CN114583171A nicht offenbart.

Auf dem technischen Gebiet der Batterieherstellung, insbesondere der Lithium-Ionen-Batterien und Natrium-Ionen-Batterien, einschließlich wiederaufladbarer Batterien, besteht ein ständiges und zunehmendes Bedürfnis nach Bindemitteln, die bereits in geringer Konzentration eine ausreichende Kohäsion innerhalb der Aktivschicht der Elektrode und eine ausrechende Adhäsion der Aktivschicht am Stromabnehmer der Elektrode bewirken, denn je geringer der Anteil des Bindemittels an der Aktivschicht ist, desto höher ist die Konzentration des elektrochemisch aktiven Materials und damit die Energiedichte. Außerdem besteht ein Bedürfnis nach Bindemitteln mit hoher Löslichkeit, um Ressourcen zu sparen und den Energiebedarf für die Entfernung von Lösungsmitteln zu minimieren. Schließlich besteht auch ein Bedürfnis, die Komplexität der Zusammensetzung und den Aufwand zur Herstellung der Bindemittel zu verringern.

Zur Erfüllung dieser Bedürfnisse wird gemäß einem ersten Aspekt der Erfindung ein Bindemittelsystem vorgeschlagen für die Herstellung einer Elektrode, insbesondere Kathode, für eine elektrochemische Zelle, wobei das Bindemittelsystem umfasst:
(a) ein Phenolharz aus der Gruppe der Novolake,
   und
(b) zum Vernetzen des Phenolharzes aus der Gruppe der Novolake ein Vernetzungsmittel.

Im Kontext der vorliegenden Beschreibung bezeichnet der Begriff Bindemittelsystem eine Kombination umfassend
(a) ein Phenolharz aus der Gruppe der Novolake,
   und
(b) ein Vernetzungsmittel, welches dazu in der Lage und dafür vorgesehen ist, bei der Herstellung einer Elektrode das Phenolharz aus der Gruppe der Novolake in-situ zu vernetzen.

Im Kontext der vorliegenden Beschreibung bezeichnet der Begriff Vernetzungsmittel einen Stoff, der entweder eine als Kettenreaktion verlaufende Vernetzung der im Phenolharz aus der Gruppe der Novolake vorhandenen reaktiven Gruppen initiiert (Beispiele für derartige Vernetzungsmittel sind Carbonsäuren und deren Ester und Anhydride), oder der in stöchiometrischen Mengen in Polyadditions- oder Polykondensations-Reaktionen mit reaktiven Gruppen des Phenolharzes aus der Gruppe der Novolake vernetzt (Beispiele für derartige Vernetzungsmittel sind Isocyanate mit zwei oder mehr Isocyanatgruppen pro Molekül, Epoxide mit zwei oder mehr Epoxidgruppen pro Molekül, Hexamethylentetramin sowie Carbonsäuren mit zwei oder mehr Carboxylgruppen pro Molekül und deren Ester und Anhydride).

Weitere hierin beschriebene Aspekte betreffen
- die Verwendung des erfindungsgemäßen Bindemittelsystems zur Herstellung einer Elektrode, insbesondere Kathode, für eine elektrochemische Zelle bzw. zur Anbindung eines elektrochemisch aktiven Materials am Stromabnehmer einer Elektrode, insbesondere Kathode, einer elektrochemischen Zelle, insbesondere einen Stromabnehmer umfassend Aluminium;
- eine Mischung enthaltend das erfindungsgemäße Bindemittelsystem zur Herstellung einer Elektrode, insbesondere Kathode, für eine elektrochemische Zelle;
- die Verwendung der erfindungsgemäßen Mischung zur Herstellung einer Elektrode, insbesondere Kathode, für eine elektrochemische Zelle;
- eine Elektrode, insbesondere Kathode, für eine elektrochemische Zelle;
- ein Verfahren zur Herstellung einer erfindungsgemäßen Elektrode, insbesondere Kathode, für eine elektrochemische Zelle;
- eine elektrochemische Zelle, bevorzugt aus der Gruppe der Lithium-Ionen-Batterien und Natrium-Ionen-Batterien, einschließlich wiederaufladbarer Batterien umfassend eine erfindungsgemäße Elektrode, insbesondere Kathode.

Die vorstehend angegebenen Nachteile des Standes der Technik betreffen jeweils auch die hier genannten weiteren Aspekte der vorliegenden Erfindung; die vorstehend dargelegten Überlegungen zu diversen Bedürfnissen und Aufgabenstellungen gelten jeweils entsprechend.

Die Erfindung wird in den beigefügten Patentansprüchen definiert. Bevorzugte Ausgestaltungen und Merkmale der vorliegenden Erfindung ergeben sich überdies aus der nachfolgenden Beschreibung einschließlich der Beispiele. Soweit für einen erfindungsgemäßen Aspekt bestimmte Ausgestaltungen als bevorzugt bezeichnet werden, gelten die entsprechenden Ausführungen jeweils auch für die anderen Aspekte der vorliegenden Erfindung (wie in den Ansprüchen definiert und/oder in der Beschreibung offenbart) mutatis mutandis, sofern sich im Einzelfall für die Fachperson aus dem vorliegenden Text nichts anderes ergibt. Bevorzugte individuelle Merkmale erfindungsgemäßer Aspekte (wie in den Ansprüchen definiert und/oder in der Beschreibung offenbart) sind miteinander kombinierbar und werden vorzugsweise miteinander kombiniert, sofern sich im Einzelfall für die Fachperson aus dem vorliegenden Text nichts anderes ergibt.

Phenolharze aus der Gruppe der Novolake, ihre Strukturen und ihre Herstellung sind im Stand der Technik bekannt. Novolake sind lösliche, schmelzbare, lagerstabile, nicht selbsthärtende Oligomere, herstellbar durch Kondensation von Phenolmonomeren mit Formaldehyd in Gegenwart saurer Katalysatoren. In einem Phenolharz aus der Gruppe der Novolake sind die Phenolringe ausschließlich über Methylen-Brücken verknüpft. Phenolharze aus der Gruppe der Novolake können nach Zusatz von Härtungsmitteln bei erhöhter Temperatur oder katalytisch unter Vernetzung gehärtet werden.

Für das erfindungsgemäße Bindemittelsystem geeignete Phenolharze aus der Gruppe der Novolake umfassen bevorzugt
- phenolische Struktureinheiten (a1) 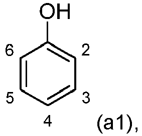 wobei an einer, zwei oder drei der Positionen 2, 4 und 6 (anstatt einer Bindung zu Wasserstoff wie im entsprechenden Phenolmonomer) eine Bindung an eine weitere strukturelle Einheit des Phenolharzes vorliegt,
- optional phenolische Struktureinheiten (a2) 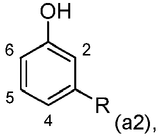 wobei der Substituent R ein gesättigter oder ungesättigter Kohlenwasserstoffrest mit insgesamt 1 bis 35 Kohlenstoff-Atomen ist und wobei an einer, zwei oder drei der Positionen 2, 4 und 6 (anstatt einer Bindung zu Wasserstoff wie im entsprechenden Phenolmonomer) eine Bindung an eine weitere strukturelle Einheit des Phenolharzes vorliegt,
- optional phenolische Struktureinheiten (a3) 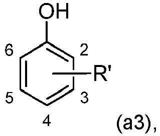 wobei sich der Substituent R' an der Position 2 oder 4 befindet und ein gesättigter oder ungesättigter Kohlenwasserstoffrest mit insgesamt 1 bis 15 Kohlenstoff-Atomen ist und wobei an einer oder zwei der Positionen 2, 4 und 6 (anstatt einer Bindung zu Wasserstoff wie im entsprechenden Phenolmonomer) eine Bindung an eine weitere strukturelle Einheit des Phenolharzes vorliegt
- sowie Struktureinheiten (a4) 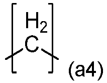 welche jeweils zwei phenolische Struktureinheiten in ortho-ortho-, ortho-para- oder para-para-Kopplung verbinden.

Die Struktureinheiten (a1) wie oben dargestellt sind phenolische Struktureinheiten, die von Phenol (Hydroxybenzen) ohne weitere Substituenten abgeleitet sind.

Die Struktureinheiten (a2) wie oben dargestellt sind phenolische Struktureinheiten, die von einem Phenol-Monomer abgeleitet sind, dessen Phenolring in meta-Stellung (Position 3) einen Substituenten R in Form eines gesättigten oder ungesättigten Kohlenwasserstoff-Rests mit insgesamt 1 bis 35 Kohlenstoff-Atomen, bevorzugt 5 bis 15 Kohlenstoffatomen, aufweist. Bevorzugt ist der Substituent R ein ungesättigter Kohlenwasserstoff-Rest mit insgesamt 1 bis 35 Kohlenstoff-Atomen, bevorzugt 5 bis 15 Kohlenstoffatomen. Weiter bevorzugt ist der Substituent R' ein einfach oder mehrfach ungesättigter, bevorzugt ein-, zwei- oder dreifach ungesättigter Rest mit insgesamt 1 bis 35 Kohlenstoff-Atomen, bevorzugt 5 bis 15 Kohlenstoffatomen. Noch weiter bevorzugt ist der Substituent R' ein mehrfach ungesättigter Kohlenwasserstoff-Rest, wobei Doppelbindungen vorzugsweise in den Positionen 8, 11 und 14 angeordnet sind:

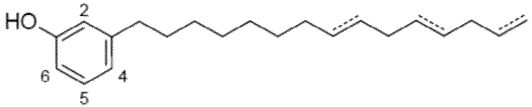

Besonders bevorzugt sind die Struktureinheiten (a2) wie oben dargestellt phenolische Struktureinheiten, die von Cardanol abgeleitet sind:

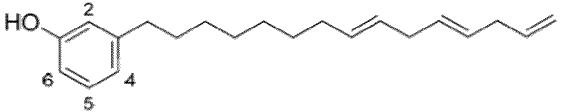

Die Struktureinheiten (a3) wie oben dargestellt sind phenolische Struktureinheiten, die von einem Phenol-Monomer abgeleitet sind, dessen Phenolring in ortho- oder para-Stellung (Position 2 oder 4) einen Substituenten R' in Form eines gesättigten oder ungesättigten Kohlenwasserstoff-Rests mit insgesamt 1 bis 9 Kohlenstoff-Atomen aufweist. Bevorzugt ist der Substituent R' ein gesättigter Kohlenwasserstoff-Rest mit insgesamt 1 bis 9 Kohlenstoff-Atomen. Weiter bevorzugt ist der Substituent R ein gesättigter Kohlenwasserstoff-Rest mit insgesamt 1 bis 9 Kohlenstoff-Atomen und befindet sich in ortho-Stellung am Phenolring. Noch weiter bevorzugt ist der Substituent R ein gesättigter Kohlenwasserstoff-Rest mit insgesamt 1, 4, 8 oder 9 Kohlenstoff-Atomen und befindet sich in ortho-Stellung am Phenolring. Bevorzugt sind die Struktureinheiten (a3) wie oben dargestellt phenolische Struktureinheiten, die von o-Kresol abgeleitet sind:

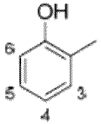

Der Begriff Kohlenwasserstoff-Rest bezeichnet eine strukturelle Einheit in Form eines Substituenten R bzw. R' an einem Phenolring wie oben beschrieben, der nur Kohlenstoff- und Wasserstoffatome enthält, und keine Heteroatome.

Die Struktureinheiten (a4) sind Methylenbrücken, welche jeweils zwei Phenolringe verbinden.

Erfindungsgemäß bevorzugt sind Phenolharze aus der Gruppe der Novolake, in denen die phenolischen Struktureinheiten
- ausschließlich Struktureinheiten (a1) wie oben beschrieben sind, oder
- Struktureinheiten (a1) und Struktureinheiten (a2) wie oben beschrieben sind, oder
- Struktureinheiten (a1) und Struktureinheiten (a3) wie oben beschrieben sind, oder
- Struktureinheiten (a1), Struktureinheiten (a2) und Struktureinheiten (a3) wie oben beschrieben sind,
wobei die Struktureinheiten (a2) bevorzugt jeweils von Cardanol abgeleitete Struktureinheiten sind und die Struktureinheiten (a3) bevorzugt jeweils von o-Kresol abgeleitete Struktureinheiten.

Weiter bevorzugt weist das Phenolharz aus der Gruppe der Novolake
- ein Zahlenmittel *Mₙ* der Molmasse im Bereich von 500 g/mol bis 1400 g/mol, bevorzugt 600 g/mol bis 1300 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und/oder
- ein Massenmittel *M*_{w} der Molmasse im Bereich von 600 g/mol bis 8500 g/mol, bevorzugt 1200 g/mol bis 8000 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und/oder
- eine Polydispersität *Ð* = *M*_{w}/*Mₙ* im Bereich von 1,90 bis 6,50, bevorzugt 2,00 bis 6,00 auf. GPC steht für "Gelpermeationschromatographie".

Vorzugsweise fallen alle drei Parameter Zahlenmittel *Mₙ* der Molmasse, Massenmittel *M*_{w} der Molmasse und Polydispersität *Ð* = *M*_{w}/*Mₙ* des Phenolharzes aus der Gruppe der Novolake in die oben angegebenen bevorzugten Bereiche, d.h. das Phenolharz aus der Gruppe der Novolake weist
- ein Zahlenmittel *M*ₙ der Molmasse im Bereich von 500 g/mol bis 1400 g/mol, bevorzugt 600 g/mol bis 1300 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und
- ein Massenmittel *M*_{w} der Molmasse im Bereich von 600 g/mol bis 8500 g/mol, bevorzugt 1200 g/mol bis 8000 g/mol, jeweils vorzugsweise bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
   und
- eine Polydispersität *Ð* = *M*_{w}/*Mₙ* im Bereich von 1,90 bis 6,50, bevorzugt 2,00 bis 6,00 auf.

Die Schmelzviskosität des Phenolharzes aus der Gruppe der Novolake liegt im Bereich von 100 Pa*s bis 2000 Pa*s, gemessen mittels Brookfield CAP 2000+ bei einer Temperatur von 120 °C bzw. 130 °C. Die Temperatur für die Bestimmung der Schmelzviskosität ist hierbei unter Berücksichtigung des Schmelzbereichs des jeweiligen Phenolharzes aus der Gruppe der Novolake gewählt, bei solchen Novolaken, die bei 120 °C noch nicht schmelzen, erfolgte die Bestimmung der Schmelzviskosität bei 130°C.

Phenolharze aus der Gruppe der Novolake, insbesondere mit den oben als bevorzugt kennzeichneten Merkmalen, sind herstellbar durch Reaktion von Formaldehyd und Phenolmonomeren bei einer Temperatur von mindestens 80 °C, bevorzugt bei einer Temperatur im Bereich von 100 °C bis 110 °C, wobei das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90, und anschließende Destillation bei einem Druck von 10 kPa oder weniger und einer Temperatur von 130 °C oder mehr. Durch die Destillation werden Wasser und nicht umgesetzte Phenolmonomere so weit wie möglich entfernt.

Die Edukte Formaldehyd und Phenolmonomere werden für die Reaktion so dosiert, dass das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90. Die Reaktion erfolgt bei einer Temperatur von mindestens 80°C, bevorzugt bei einer Temperatur im Bereich von 100 °C bis 110 °C. Danach wird eine Destillation bei einem Druck von 10 kPa oder weniger und einer Temperatur von 130 °C oder mehr durchgeführt.

Der Begriff "Phenolmonomere" umfasst hierbei sowohl unsubstituiertes Phenol (Hydroxybenzen) als auch substituierte Phenole, d.h. Phenole, bei denen sich an einer, zwei oder drei Positionen des Phenolrings anstelle eines Wasserstoffatoms ein Substituent befindet. Unsubstituiertes Phenol bildet in einem Phenolharz aus der Gruppe der Novolake Struktureinheiten (a1) wie oben definiert. Bevorzugte substituierte Phenole sind solche, die im Phenolharz aus der Gruppe der Novolake Struktureinheiten (a2) und (a3) wie oben definiert bilden. Besonders bevorzugte substituierte Phenole sind ausgewählt aus der Gruppe bestehend aus Cardanol und o-Kresol.

Es wird eine oder mehrere Sorten von Phenolmonomeren eingesetzt, erfindungsgemäß bevorzugt wird
- ausschließlich (Hydroxybenzen) als Phenolmonomer eingesetzt, oder
- Hydroxybenzen und Struktureinheiten (a2) wie oben beschrieben bildende Phenolmonomere,
- Hydroxybenzen und Struktureinheiten (a3) wie oben beschrieben bildende Phenolmonomere, oder
- Hydroxybenzen, Struktureinheiten (a2) wie oben beschrieben bildende Phenolmonomere und Struktureinheiten (a3) wie oben beschrieben bildende Phenolmonomere
eingesetzt, wobei als Struktureinheiten (a2) bildendes Phenolmonomer jeweils bevorzugt Cardanol eingesetzt wird und als Struktureinheiten (a3) bildendes Phenolmonomer jeweils bevorzugt o-Kresol.

In einer ersten Verfahrensvariante erfolgt die Reaktion von Formaldehyd und Phenolmonomeren, wobei das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90, in Gegenwart eines Katalysators ausgewählt aus der Gruppe der Säuren, bevorzugt ausgewählt aus der Gruppe bestehend aus Oxalsäure, Salicylsäure, Schwefelsäure, p-Toluolsulfonsäure, Salzsäure und Phosphorsäure.

In einer zweiten Verfahrensvariante umfasst die Reaktion von Formaldehyd und Phenolmonomeren, wobei das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90, eine erste Stufe in Gegenwart eines Katalysators ausgewählt aus der Gruppe der Salze zweiwertiger Metallionen, bevorzugt Salze zweiwertiger Ionen von Metallen aus der Gruppe bestehend aus Mn, Zn, Cd, Mg, Co, Ni, Fe, Pb, Ca und Ba, insbesondere Zinksalze, und eine anschließende zweite Stufe in Gegenwart eines Katalysators ausgewählt aus der Gruppe der Säuren, bevorzugt ausgewählt aus der Gruppe bestehend aus Oxalsäure, Salicylsäure, Schwefelsäure, p-Toluolsulfonsäure, Salzsäure und Phosphorsäure.

Bevorzugt sind Phenolharze aus der Gruppe der Novolake, die herstellbar sind durch Reaktion von Formaldehyd und Phenolmonomeren bei einer Temperatur im Bereich von 100 °C bis 110 °C, wobei das molare Verhältnis von Formaldehyd zu Phenolmonomeren im Bereich von 0,35 bis 0,95, weiter bevorzugt im Bereich von 0,4 bis 0,90, besonders bevorzugt im Bereich von 0,65 bis 0,90 liegt, und anschließende Destillation bei einem Druck von 10 kPa oder weniger und einer Temperatur von 130 °C oder mehr.

Die Einhaltung der o.g. Reaktionsbedingungen, insbesondere innerhalb der jeweils bevorzugten Bereiche, ist entscheidend dafür, dass Novolake resultieren mit *Ð*, *M*_{w} und *M*ₙ wie oben definiert. Bevorzugt erfolgt die Reaktion von Formaldehyd und Phenolmonomeren so, dass alle Reaktionsbedingungen in die oben definierten bevorzugten Bereiche fallen.

Für das erfindungsgemäße Bindemittelsystem geeignete Vernetzungsmittel sind bevorzugt ausgewählt aus der Gruppe bestehend aus Epoxiden mit zwei oder mehr Epoxidgruppen pro Molekül, Hexamethylentetramin, Isocyanaten mit zwei oder mehr Isocyanatgruppen pro Molekül, Carbonsäuren und deren Estern und Anhydriden.

Bevorzugt sind Isocyanate ausgewählt aus der Gruppe bestehend aus Methylenbis(phenylisocyanaten) (MDI), z.B. 4,4'-Methylenbis(phenylisocyanat), polyphenylen-polyphenyl-Isocyanaten (auch als "polymeres MDI" bezeichnet), aliphatischen Isocyanaten und cycloaliphatischen Isocyanaten. Besonders bevorzugt sind Polymethylen-Polyphenyl-Isocyanate (MDI).

Bevorzugt sind Carbonsäuren mit zwei oder mehr Carboxylgruppen sowie 3 bis 10 Kohlenstoffatomen (jeweils einschließlich der Kohlenstoffatome in Carboxylgruppen) und einem pKs-Wert im Bereich 2,5 von 7,0 sowie deren Ester und Anhydride, z.B. Dicarbonsäuren aus der Gruppe bestehend aus Malonsäure (3 Kohlenstoffatome, pKs1: 2,83, pKs2: 5,69), Bernsteinsäure (4 Kohlenstoffatome, pKs1: 4,16, pKs2: 5,61), Glutarsäure (5 Kohlenstoffatome, pKs1: 4,32, pKs2: 5,42), Adipinsäure (6 Kohlenstoffatome, pKs1: 4,43, pKs2: 5,42), Terephthalsäure (8 Kohlenstoffatome, enthält einen aromatischen Ring, pKs1: 3,54, pKs2: 4,46) und Tricarbonsäuren wie z.B. Zitronensäure (6 Kohlenstoffatome, pKs1: 3,13, pKs2: 4,76, pKs3: 6,4), sowie deren Ester und Anhydride.

Besonders bevorzugt ist das Vernetzungsmittel ausgewählt aus der Gruppe der Epoxide mit zwei oder mehr Epoxidgruppen pro Molekül, besonders bevorzugt sind Epoxide aus der Gruppe der Polyethylenglykol-Diglycidylether (PEG-DGE) mit
- einem Zahlenmittel *Mₙ* der Molmasse im Bereich von 400 g/mol bis 900 g/mol, bevorzugt im Bereich von 400 g/mol bis 600 g/mol, jeweils vorzugsweise bestimmt mittels GPC gemäß DIN 55672-1:2016-03 mit Polystyren als Kalibrierstandard bei Verwendung eines RI-Detektors,
   und/oder
- einem Massenmittel *M*_{w} der Molmasse im Bereich von 500 g/mol bis 1300 g/mol, bevorzugt im Bereich von 500 g/mol bis 900 g/mol, jeweils vorzugsweise bestimmt mittels GPC gemäß DIN 55672-1:2016-03 mit Polystyren als Kalibrierstandard bei Verwendung eines RI-Detektors,
   und/oder
- einer Polydispersität *Ð* = *M*_{w}/*Mₙ* im Bereich von 1,05 bis 1,75, bevorzugt im Bereich von 1,20 bis 1,60.
   Vorzugsweise fallen alle drei Parameter Zahlenmittel *Mₙ* der Molmasse, Massenmittel *M*_{w} der Molmasse und Polydispersität *Ð* = *M*_{w}/*Mₙ* des Epoxids aus der Gruppe der Polyethylenglykol-Diglycidylether in die oben angegebenen bevorzugten Bereiche, d.h. das Epoxid aus der Gruppe der Polyethylenglykol-Diglycidylether weist
- ein Zahlenmittel *Mₙ* der Molmasse im Bereich von 400 g/mol bis 900g/mol, bevorzugt im Bereich von 400 g/mol bis 600 g/mol, jeweils vorzugsweise bestimmt mittels GPC gemäß DIN 55672-1:2016-03 mit Polystyren als Kalibrierstandard bei Verwendung eines RI-Detektors,
   und
- ein Massenmittel *M*_{w} der Molmasse im Bereich von 500 g/mol bis 1300 g/mol, bevorzugt im Bereich von 500 g/mol bis 900 g/mol, jeweils vorzugsweise bestimmt mittels GPC gemäß DIN 55672-1:2016-03 mit Polystyren als Kalibrierstandard bei Verwendung eines RI-Detektors,
   und
- eine Polydispersität *Ð* = *M*_{w}/*Mₙ* im Bereich von 1,05 bis 1,75, bevorzugt im Bereich von 1,20 bis 1,60
   auf.
Je nach Reaktivität des Bindemittelsystems wird das Bindemittelsystem als Einkomponenten-System oder als Zweikomponenten-System bereitgestellt.

Besonders reaktive Bindemittelsysteme werden üblicherweise als Zweikomponenten-System bereitgestellt, so dass das Phenolharz aus der Gruppe der Novolake und das Vernetzungsmittel räumlich voneinander getrennt sind und nicht zu einem unerwünschten Zeitpunkt miteinander reagieren können. Die Ausführung des erfindungsgemäßen Bindemittelsystems als Zweikomponenten-System ist aber nicht auf bestimmte Kombinationen von Phenolharzen aus der Gruppe der Novolake und Vernetzungsmitteln beschränkt.

Ein bevorzugtes erfindungsgemäßes Bindemittelsystem in Form eines Zweikomponenten-Systems umfasst
- einen ersten Behälter, der eine erste Komponente enthält, die das Phenolharz aus der Gruppe der Novolake umfasst, und
- einen zweiten Behälter, der eine zweite Komponente enthält, die das Vernetzungsmittel umfasst,

wobei der erste Behälter und der zweite Behälter voneinander getrennt sind, so dass das Phenolharz aus der Gruppe der Novolake und das Vernetzungsmittel räumlich voneinander getrennt sind. Die erste Komponente des erfindungsgemäßen Zweikomponenten-Systems umfasst somit kein Vernetzungsmittel und die zweite Komponente des erfindungsgemäßen Zweikomponenten-Systems umfasst keinen Bestandteil, der mit dem Vernetzungsmittel reagiert, insbesondere kein vernetzbares Harz. Der erste und der zweite Behälter sind z.B. zwei separate Gefäße, oder zwei voneinander getrennte Kammern in einem Gefäß.

Bevorzugt ist ein erfindungsgemäßes Bindemittelsystem in Form eines Zweikomponenten-Systems, wobei
- die erste Komponente das Phenolharz aus der Gruppe der Novolake in einem Lösungsmittel umfasst,
   und
- die zweite Komponente das Vernetzungsmittel umfasst, optional in einem Lösungsmittel.

Das Phenolharz aus der Gruppe der Novolake ist in der ersten Komponente zumindest teilweise in dem Lösungsmittel gelöst. Bevorzugt besteht die erste Komponente aus dem Phenolharz aus der Gruppe der Novolake und dem Lösungsmittel. Umfasst die zweite Komponente ein Lösungsmittel, so ist das Vernetzungsmittel zumindest teilweise in dem Lösungsmittel gelöst. Bevorzugt besteht die zweite Komponente aus dem Vernetzungsmittel, bzw. aus dem Vernetzungsmittel und einem Lösungsmittel. Sowohl das Lösungsmittel der ersten als auch der zweiten Komponente kann eine einzelne Substanz sein oder eine Mischung mehrerer Substanzen. Es versteht sich dabei von selbst, dass Substanzen, die gegenüber einem Phenolharz aus der Gruppe der Novolake als Vernetzungsmittel wirken, nicht als Lösungsmittel eingesetzt werden, und nicht als Lösungsmittel zu zählen sind.

Bevorzugte Lösungsmittel haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C. Dies gilt sowohl für die erste als auch für die zweite Komponente.

Bevorzugt enthält das Lösungsmittel der ersten und/oder der zweiten Komponente (sofern diese ein Lösungsmittel enthält) eine oder mehrere Verbindungen mit einer oder mehreren Carbonylgruppen pro Molekül. Weiter bevorzugt ist das Lösungsmittel der ersten und/oder der zweiten Komponente (sofern diese ein Lösungsmittel enthält) unabhängig voneinander ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist das Lösungsmittel der ersten und der zweiten Komponente (sofern diese ein Lösungsmittel enthält) Cyclohexanon.

Bevorzugt ist sowohl in der ersten als auch in der zweiten Komponente die Konzentration von N-Methyl-2-Pyrrolidon 0,01 Gew% oder kleiner bezogen auf die Gesamtmasse der jeweiligen Komponente. Besonders bevorzugt enthält weder die erste noch die zweite Komponente N-Methyl-2-Pyrrolidon.

Sofern die zweite Komponente ein Lösungsmittel enthält, ist dieses vorzugsweise identisch mit dem Lösungsmittel der ersten Komponente.

Die Konzentration des Phenolharzes aus der Gruppe der Novolake liegt bevorzugt im Bereich von 3 Gew% bis 40 Gew%, besonders bevorzugt 3 Gew% bis 20 Gew%, bezogen auf die Gesamtmasse der ersten Komponente. Bei einem Massenanteil von 3 Gew% bis 20 Gew% an Phenolharz kann der Anteil der ersten Komponente an Lösungsmittel so eingestellt werden, dass bei der erfindungsgemäßen Herstellung einer Elektrode keine weitere Trägerflüssigkeit zugegeben werden muss (zu Details siehe weiter unten).

Die Konzentration des Vernetzungsmittels liegt im Bereich von 5 Gew% bis 100 Gew%, bezogen auf die Gesamtmasse der ersten Komponente.

Wenig reaktive Bindemittelsysteme können auch als Einkomponenten-System bereitgestellt werden, so dass das Phenolharz aus der Gruppe der Novolake und das Vernetzungsmittel räumlich nicht voneinander getrennt sind. Dabei versteht es sich, dass die Ausführung des erfindungsgemäßen Bindemittelsystems als Einkomponenten-System auf solche Kombinationen von Phenolharzen aus der Gruppe der Novolake und Vernetzungsmitteln beschränkt ist, die bei sachgemäßer Handhabung nicht zu einem unerwünschten Zeitpunkt miteinander reagieren. Für die Ausführung als Einkomponenten-System geeignet sind Kombinationen eines Phenolharzes aus der Gruppe der Novolake mit einem Vernetzungsmittel aus der Gruppe bestehend aus Epoxiden mit zwei oder mehr Epoxidgruppen pro Molekül, Carbonsäuren, Estern von Carbonsäuren und Hexamethylentetramin. Für die Ausführung als Einkomponenten-System in Form eines Feststoffgemischs sind auch Kombinationen eines Phenolharzes aus der Gruppe der Novolake mit einem Vernetzungsmittel aus der Gruppe bestehend aus Isocyanaten mit zwei oder mehr Isocyanatgruppen pro Molekül geeignet.

Ein bevorzugtes erfindungsgemäßes Bindemittelsystem in Form eines Einkomponenten-Systems ist ein Gemisch umfassend
(a) das Phenolharz aus der Gruppe der Novolake
   und
(b) das Vernetzungsmittel,
wobei das Massenverhältnis des Phenolharzes aus der Gruppe der Novolake zum Vernetzungsmittel bevorzugt im Bereich von 1:2 bis 99:1 liegt.

Bevorzugt ist in diesem Einkomponenten-System der Anteil an Produkten von Vernetzungsreaktionen des Phenolharzes aus der Gruppe der Novolake mit dem Vernetzungsmittel 0,01 Gew% oder kleiner bezogen auf die Gesamtmasse des Einkomponenten-Systems. Besonders bevorzugt ist im Einkomponenten-System noch gar keine Vernetzung des Phenolharzes aus der Gruppe der Novolake erfolgt.

Ein erfindungsgemäßes Bindemittelsystem in Form eines Einkomponenten-Systems kann ein Gemisch sein enthaltend das Phenolharz aus der Gruppe der Novolake in fester Form und das Vernetzungsmittel in fester Form oder in flüssiger Form. Bevorzugt besteht dieses Gemisch aus dem Phenolharz aus der Gruppe der Novolake und dem Vernetzungsmittel.

Ein erfindungsgemäßes Bindemittelsystem in Form eines Einkomponenten-Systems kann ein Gemisch sein umfassend das Phenolharz aus der Gruppe der Novolake und das Vernetzungsmittel in einem Lösungsmittel, wobei das Vernetzungsmittel ausgewählt ist aus der Gruppe bestehend aus Epoxiden mit zwei oder mehr Epoxidgruppen pro Molekül, Estern von Carbonsäuren und Hexamethylentetramin. Das Phenolharz aus der Gruppe der Novolake und das Vernetzungsmittel sind zumindest teilweise in dem Lösungsmittel gelöst. Bevorzugt besteht das Gemisch aus dem Phenolharz aus der Gruppe der Novolake und dem Vernetzungsmittel in einem Lösungsmittel.

Das Lösungsmittel kann eine einzelne Substanz sein oder eine Mischung mehrerer Substanzen. Es versteht sich dabei von selbst, dass Substanzen, die gegenüber einem Phenolharz aus der Gruppe der Novolake als Vernetzungsmittel wirken, nicht als Lösungsmittel eingesetzt werden, und nicht als Lösungsmittel zu zählen sind.

Bevorzugte Lösungsmittel haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C.

Bevorzugt enthält das Lösungsmittel eine oder mehrere Verbindungen mit einer oder mehreren Carbonylgruppen pro Molekül. Weiter bevorzugt ist das Lösungsmittel ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist das Lösungsmittel Cyclohexanon.

Enthält das Bindemittelsystem in Form eines Einkomponenten-Systems ein Lösungsmittel, so liegt die Konzentration des Phenolharzes aus der Gruppe der Novolake bevorzugt im Bereich von 3 Gew% bis 20 Gew%, und die Konzentration des Vernetzungsmittels aus der Gruppe bestehend aus Epoxiden mit zwei oder mehr Epoxidgruppen pro Molekül, Hexamethylentetramin und Estern von Carbonsäuren im Bereich von 0,05 Gew% bis 7 Gew%, jeweils bezogen auf die Gesamtmasse des Bindemittelsystems (einschließlich Lösungsmittel). Bei einem Massenanteil von 3 Gew% bis 20 Gew% an Phenolharz kann der Anteil der des Bindemittelsystems an Lösungsmittel so eingestellt werden, dass bei der erfindungsgemäßen Herstellung einer Elektrode keine weitere Trägerflüssigkeit zugegeben werden muss (zu Details siehe weiter unten).

Bevorzugt ist in einem erfindungsgemäßen Bindemittelsystem in Form eines Einkomponenten-Systems die Konzentration von N-Methyl-2-Pyrrolidon 0,01 Gew% oder kleiner bezogen auf die Gesamtmasse des erfindungsgemäßen Bindemittelsystems in Form eines Einkomponenten-Systems. Besonders bevorzugt enthält das erfindungsgemäße Bindemittelsystem in Form eines Einkomponenten-Systems kein N-Methyl-2-Pyrrolidon.

In einem ersten bevorzugten erfindungsgemäßen Bindemittelsystem in Form eines Einkomponenten-Systems ist das Vernetzungsmittel ein Epoxid mit zwei oder mehr Epoxidgruppen pro Molekül, und das Massenverhältnis des Phenolharzes aus der Gruppe der Novolake zu Epoxid mit zwei oder mehr Epoxidgruppen pro Molekül liegt im Bereich von 2,5:1 bis 8,5:1.

In einem anderen bevorzugten erfindungsgemäßen Bindemittelsystem in Form eines Einkomponenten-Systems ist das Vernetzungsmittel Hexamethylentetramin, und das Massenverhältnis des Phenolharzes aus der Gruppe der Novolake zu Hexamethylentetramin liegt im Bereich von 9:1 bis 99:1.

In einem weiteren bevorzugten erfindungsgemäßen Bindemittelsystem in Form eines Einkomponenten-Systems ohne Lösungsmittel ist das Vernetzungsmittel ein Isocyanat mit zwei oder mehr Isocyanatgruppen pro Molekül, und das Massenverhältnis des Phenolharzes aus der Gruppe der Novolake zu Isocyanat liegt im Bereich von 1:2 bis 4:1.

Bevorzugt enthält ein erfindungsgemäßen Bindemittelsystem Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger bezogen auf die Gesamtmasse des Bindemittelsystems. Besonders bevorzugt enthält ein erfindungsgemäßes Bindemittelsystem keine Bestandteile aus der Gruppe bestehend aus vulkanisierten natürlichen und synthetischen Kautschuken, denn es hat sich gezeigt, dass - anders als in den aus US 2013/0323592 A1 bekannten Bindemittelsystemen - Bestandteile aus der Gruppe bestehend aus vulkanisierten natürlichen und synthetischen Kautschuken nicht erforderlich sind, um die oben definierten Anforderungen an ein erfindungsgemäßes Bindemittelsystem zu erfüllen.

Ein erfindungsgemäß besonders bevorzugtes Bindemittelsystem umfasst:
(a) ein Phenolharz aus der Gruppe der Novolake, wobei das Phenolharz aus der Gruppe der Novolake
   - ein Zahlenmittel *Mₙ* der Molmasse im Bereich von 600 g/mol bis 1300 g/mol bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
      und
   - ein Massenmittel *M*_{w} der Molmasse im Bereich von 1200 g/mol bis 8000 g/mol, bestimmt mittels GPC gemäß DIN 55672-1:2016-03 mit Polystyren als Kalibrierstandard bei Verwendung eines RI-Detektors, wobei die Auswertegrenzen so gelegt sind, dass monomeres unsubstituiertes Phenol (Hydroxybenzen) nicht berücksichtigt wird,
      und
   - eine Polydispersität *Ð* = *M*_{w}/*Mₙ* im Bereich von 2,00 bis 6,00
      aufweist
   und
(b) zum Vernetzen des Phenolharzes aus der Gruppe der Novolake ein Vernetzungsmittel,
   wobei das Vernetzungsmittel ausgewählt ist aus der Gruppe bestehend aus Hexamethylentetramin und Epoxiden mit zwei oder mehr Epoxidgruppen pro Molekül,
   wobei das Vernetzungsmittel bevorzugt ausgewählt ist aus der Gruppe der Polyethylenglykol-Diglycidylether (PEG-DGE) mit
      - einem Zahlenmittel *Mₙ* der Molmasse im Bereich von 400 g/mol bis 900g/mol bestimmt mittels GPC gemäß DIN 55672-1:2016-03 mit Polystyren als Kalibrierstandard bei Verwendung eines RI-Detektors,
         und
      - einem Massenmittel *M*_{w} der Molmasse im Bereich von 500 g/mol bis 1300 g/mol bestimmt mittels GPC gemäß DIN 55672-1:2016-03 mit Polystyren als Kalibrierstandard bei Verwendung eines RI-Detektors,
         und
      - einer Polydispersität *Ð* = *M*_{w}/*Mₙ* im Bereich von 1,05 bis 1,75,
   und das Massenverhältnis des Phenolharzes aus der Gruppe der Novolake zu Epoxid mit zwei oder mehr Epoxidgruppen pro Molekül im Bereich von 2,5:1 bis 8,5:1 liegt,
wobei das Bindemittelsystem Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, bezogen auf die Gesamtmasse des Bindemittelsystems enthält, und bevorzugt keine Bestandteile aus der Gruppe bestehend aus vulkanisierten natürlichen und synthetischen Kautschuken.

Ein zweiter Aspekt der vorliegenden Erfindung betrifft die Verwendung eines erfindungsgemäßen Bindemittelsystems gemäß dem ersten Aspekt der vorliegenden Erfindung wie oben beschrieben zur Herstellung einer Elektrode, insbesondere einer Kathode für eine elektrochemische Zelle bzw. zur Anbindung eines elektrochemisch aktiven Materials am Stromabnehmer einer Elektrode, insbesondere Kathode, einer elektrochemischen Zelle, insbesondere einen Stromabnehmer umfassend Aluminium. Hinsichtlich geeigneter und bevorzugter Bindemittelsysteme wird auf die obigen Ausführungen zum ersten Aspekt der vorliegenden Erfindung verwiesen. Bevorzugt wird ein erfindungsgemäßes Bindemittelsystem mit den oben als bevorzugt gekennzeichneten Merkmalen verwendet.

Ein dritter Aspekt der vorliegenden Erfindung betrifft eine Mischung zur Herstellung einer Elektrode, insbesondere Kathode, für eine elektrochemische Zelle, wobei die Mischung umfasst:
ein Bindemittelsystem gemäß dem ersten Aspekt wie oben beschrieben
   sowie
(c) ein elektrochemisch aktives Material
wobei das Massenverhältnis des elektrochemisch aktiven Materials zum Phenolharz aus der Gruppe der Novolake im Bereich von 18:1 bis 300:1 liegt.

Hinsichtlich geeigneter und bevorzugter Bindemittelsysteme wird auf die obigen Ausführungen zum ersten Aspekt der vorliegenden Erfindung verwiesen. Das in der erfindungsgemäßen Mischung enthaltene Bindemittelsystem gemäß dem ersten Aspekt wie oben beschrieben ist bevorzugt ein erfindungsgemäßes Bindemittelsystem mit den oben als bevorzugt gekennzeichneten Merkmalen.

Ein elektrochemisch aktives Material im Sinne der vorliegenden Beschreibung ist ein Material, das beim Laden und beim Entladen der elektrochemischen Zelle jeweils seinen Oxidationszustand ändert. Bevorzugt handelt es sich bei dem elektrisch aktiven Material um ein elektrochemisch aktives Material für eine Kathode (Kathoden-Aktivmaterial), d.h. ein elektrochemisch aktives Material, das beim Entladen der elektrochemischen Zelle elektrochemisch reduziert wird (wie oben beschrieben).

In der erfindungsgemäßen Mischung liegt das elektrochemisch aktive Material typischerweise in Form von Partikeln vor mit einem d50- Wert der Partikelgrößenverteilung von 50 nm bis 50 µm, bevorzugt 1 µm bis 20 µm, gemessen mittels Laserdiffraktometrie.

Bevorzugt sind erfindungsgemäße Mischungen umfassend ein elektrochemisch aktives Material ausgewählt aus der Gruppe bestehend aus
- Materialien, die in der Lage sind, elementares Alkalimetall reversibel aufzunehmen und wieder abzugeben
- Materialien, die in der Lage sind, Alkalimetallkationen reversibel zu interkalieren und zu deinterkalieren,
wobei das Alkalimetall bevorzugt ausgewählt ist aus der Gruppe bestehend aus Lithium und Natrium.

Geeignete elektrochemisch aktive Materialien, die in der Lage sind, elementares Alkalimetall reversibel aufzunehmen und wieder abzugeben, sind z.B. Metalle und Legierungen von Metallen, die eine Legierung mit Alkalimetall bilden können, bzw. die entsprechenden Legierungen mit Alkalimetall. Eine Legierung mit Alkalimetall bilden können z.B. Zinn Sn, Indium In und Silicium Si, sowie Legierungen umfassend zwei oder mehrere dieser Metalle. Derartige elektrochemisch aktive Materialien sind geeignet als elektrochemisch aktive Materialien für Anoden (Anoden-Aktivmaterial wie oben beschrieben), sie werden beim Laden der elektrochemischen Zelle durch Aufnahme von elementarem Alkalimetall elektrochemisch reduziert und beim Entladen der elektrochemischen Zelle durch Abgabe von elementarem Alkalimetall elektrochemisch oxidiert.

Geeignete elektrochemisch aktive Materialien, die in der Lage sind, Alkalimetallkationen reversibel zu interkalieren und zu deinterkalieren, sind z.B. Graphit (Interkalation und Deinterkalation von Lithiumionen), amorpher Kohlenstoff (Interkalation und Deinterkalation von Natriumionen), Hexacyanometallate, und Mischoxide eines Alkalimetalls und eines oder mehrerer Übergangsmetalle, insbesondere aus der Gruppe bestehend aus Ni, Co, Mn, Cu, Fe, Ti und V, sowie Lithium-Übergangsmetall-Phosphate, insbesondere Lithium-Eisen-Phosphat, Lithium-Eisen-Mangan-Phosphat und Lithium-Vanadium Phosphat.

Bevorzugt ist das elektrochemisch aktive Material der erfindungsgemäßen Mischung ein Kathoden-Aktivmaterial wie oben definiert. Geeignete Kathoden-Aktivmaterialien, die in der Lage sind, Alkalimetallkationen beim Laden einer elektrochemischen Zelle reversibel zu deinterkalieren und beim Entladen zu interkalieren, sind Mischoxide eines Alkalimetalls und eines oder mehrerer Metalle aus der Gruppe bestehend aus Ni, Co, Mn, V und Fe, z.B. LiCoO₂, LiMnO₂, Lithium-Nickel-Cobalt-Mangan-Mischoxide (sogenannte "NCM"), Lithium-Nickel-Mangan-Spinell-Oxide, sowie Lithium-Übergangsmetall-Phosphate, z.B. LiFePO₄, Lithium-Eisen-Mangan-Phosphat, Lithium-Vanadium Phosphat, und Lithium-Nickel-Cobalt-Aluminium-Oxide (NCA).

In der erfindungsgemäßen Mischung liegt das Massenverhältnis des Phenolharzes aus der Gruppe der Novolake zum Vernetzungsmittel bevorzugt im Bereich von 1:2 bis 99:1.

In einer ersten bevorzugten erfindungsgemäßen Mischung ist das Vernetzungsmittel ein Epoxid mit zwei oder mehr Epoxidgruppen pro Molekül, und das Massenverhältnis des Phenolharzes aus der Gruppe der Novolake zu Epoxid mit zwei oder mehr Epoxidgruppen pro Molekül liegt im Bereich von 2,5:1 bis 8,5:1.

In einer anderen bevorzugten erfindungsgemäßen Mischung ist das Vernetzungsmittel Hexamethylentetramin, und das Massenverhältnis des Phenolharzes aus der Gruppe der Novolake zu Hexamethylentetramin liegt im Bereich von 9:1 bis 99:1.

In einer weiteren bevorzugten erfindungsgemäßen Mischung ist das Vernetzungsmittel ein Isocyanat mit zwei oder mehr Isocyanatgruppen pro Molekül, und das Massenverhältnis des Phenolharzes aus der Gruppe der Novolake zu Isocyanat liegt im Bereich von 1:2 bis 4:1.

Die Mischung gemäß dem dritten Aspekt der vorliegenden Erfindung zur Herstellung einer Elektrode zeichnet sich dadurch aus, dass der Massenanteil des Phenolharzes aus der Gruppe der Novolake relativ zum elektrochemisch aktiven Material ziemlich niedrig ist. Dies ist möglich, da erfindungsgemäße Bindemittelsysteme bereits in geringer Konzentration eine ausreichende Kohäsion innerhalb der Aktivschicht der Elektrode und eine ausrechende Adhäsion der Aktivschicht am Stromabnehmer bewirken. Eine hohe Konzentration des elektrochemisch aktiven Materials relativ zum Bindemittelsystem erlaubt die Herstellung von Elektroden mit hoher Energiedichte.

Da in der erfindungsgemäßen Mischung sowohl das Phenolharz aus der Gruppe der Novolake als auch das Vernetzungsmittel enthalten ist, ist es in vielen Fällen vorteilhaft, diese Mischung erst unmittelbar vor der Herstellung einer erfindungsgemäßen Elektrode herzustellen, um zu vermeiden, dass das Phenolharz aus der Gruppe der Novolake und das Vernetzungsmittel zu einem unerwünschten Zeitpunkt miteinander reagieren.

In bestimmten Ausführungsformen umfasst die erfindungsgemäße Mischung zur Herstellung einer Elektrode, insbesondere Kathode, für eine elektrochemische Zelle als weiteren Bestandteil
(d) ein elektrochemisch inaktives elektronisch leitfähiges Material.

Ein elektrochemisch inaktives elektronisch leitfähiges Material ist elektrochemisch inert, d.h. es zeigt keine Veränderung des Oxidationszustands beim Laden bzw. Entladen der elektrochemischen Zelle. Das elektrochemisch inaktive elektronisch leitfähige Material dient dazu, den Ladungstransport innerhalb der Aktivschicht sowie zwischen Aktivschicht und Stromabnehmer der Elektrode zu erleichtern.

Bevorzugte elektrochemisch inaktive elektronisch leitfähige Materiale sind ausgewählt aus der Gruppe bestehend aus Kohlenstoff-Nanofasern, Kohlenstoff-Nanotubes, Graphen, Carbon Black, Ruß, Acetylenruß (auch als acetylene black bezeichnet), Ketjenblack, Graphit, Koks und Graphenoxid.

In der erfindungsgemäßen Mischung liegt das elektrochemisch inaktive elektronisch leitfähige Material typischerweise in Form von Partikeln vor mit einer Partikelgröße von 5 nm bis 500 nm, bevorzugt 10 nm bis 80 nm, bestimmt mittels Laserdiffraktometrie oder TEM.

Bevorzugt liegt das Massenverhältnis des Phenolharzes aus der Gruppe der Novolake zum elektrochemisch inaktiven elektronisch leitfähigen Material im Bereich von 0,5 bis 5,0.

In einer Ausführungsform umfasst die erfindungsgemäße Mischung zur Herstellung einer Elektrode, insbesondere Kathode, für eine elektrochemische Zelle als weiteren Bestandteil
(e) einen festen Elektrolyten, insbesondere einen festen Elektrolyten mit ionischer Leitfähigkeit für Alkalimetallionen, insbesondere Lithium und/oder Natrium-Ionen.

Diese Ausführungsform der erfindungsgemäßen Mischung ist insbesondere zur Herstellung einer Elektrode, insbesondere Kathode, für eine elektrochemische Zelle in Form einer all-solid-state-Batterie geeignet.

Geeignete feste Elektrolyte sind z.B. Lithiumsulfide, Lithium-Oxysulfide, Lithium-Oxyphosphate, Lithium-Thiophosphate, Lithium-Argyrodite, Lithium-Halosulfide, und Lithium-Halothiophosphate und Lithium-Übergangsmetall-Halide.

In einer Ausführungsform umfasst die erfindungsgemäße Mischung zur Herstellung einer Elektrode, insbesondere Kathode, für eine elektrochemische Zelle als weiteren Bestandteil einen Katalysator, der die Vernetzung des Phenolharzes aus der Gruppe der Novolake katalysiert. Bevorzugte Katalysatoren sind ausgewählt aus der Gruppe bestehend aus Imidazolen (z.B. 1,2-Dimethyl-Imidazol), Aminen (z.B. Triethylamin), Pyridinen (z.B. 4-(3-Phenylpropyl)pyridon), Alkalimetallhydroxiden (z.B. Natriumhydroxid) und Ammonium-Salzen (z.B. Tetra-n-butylammonium-Iodid).

Bevorzugt sind jedoch erfindungsgemäße Mischungen mit einem Bindemittelsystem, dessen Vernetzungsreaktion rein thermisch induziert abläuft, so dass kein Katalysator benötigt wird. Die Abwesenheit eines Katalysators vereinfacht die Zusammensetzung der erfindungsgemäßen Mischung und vermindert die Gefahr, dass das Phenolharz aus der Gruppe der Novolake und das Vernetzungsmittel bereits vor dem gewünschten Zeitpunkt miteinander reagieren.

Die erfindungsgemäße Mischung ist eine Feststoffmischung, oder eine Suspension (auch als "slurry" bezeichnet) umfassend eine Trägerflüssigkeit.

Die Trägerflüssigkeit der Suspension kann eine einzelne Substanz sein oder eine Mischung mehrerer Substanzen. Es versteht sich dabei von selbst, dass Substanzen, die gegenüber einem Phenolharz aus der Gruppe der Novolake als Vernetzungsmittel wirken, nicht als Trägerflüssigkeit eingesetzt werden, und nicht als Trägerflüssigkeit zu zählen sind.

Wird zur Herstellung der erfindungsgemäßen Mischung ein erfindungsgemäßes Bindemittelsystem enthaltend ein Lösungsmittel (wie oben beschrieben) eingesetzt, so bildet vorzugsweise das mit dem Bindemittelsystem eingetragene Lösungsmittel die Trägerflüssigkeit der erfindungsgemäßen Mischung zur Herstellung einer Elektrode für eine elektrochemische Zelle, und es ist nicht erforderlich, weitere Trägerflüssigkeit zuzugeben.

Bevorzugte Trägerflüssigkeiten haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C.

Bevorzugt enthält die Trägerflüssigkeit eine oder mehrere Verbindungen mit einer oder mehreren Carbonylgruppen pro Molekül. Weiter bevorzugt ist die Trägerflüssigkeit ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist die Trägerflüssigkeit Cyclohexanon.

Der Anteil an Trägerflüssigkeit beträgt bevorzugt 10 Gew% bis 35 Gew%, besonders bevorzugt 15 Gew% bis 28 Gew%, bezogen auf die Gesamtmasse der Suspension.

Einzelne Bestandteile der erfindungsgemäßen Mischung zur Herstellung einer Elektrode, insbesondere Kathode, für eine elektrochemische Zelle können in der Trägerflüssigkeit zumindest teilweise gelöst sein, insbesondere das Phenolharz aus der Gruppe der Novolake und das Vernetzungsmittel. Elektrochemisch aktive Materialien und elektrochemisch inaktive elektronisch leitfähige Materialien liegen typischerweise als in der Trägerflüssigkeit suspendierte Partikel vor.

Der Anteil der erfindungsgemäßen Mischung an Phenolharz aus der Gruppe der Novolake beträgt bevorzugt 0,3 Gew% bis 4 Gew%, besonders bevorzugt 0,5 Gew% bis 3,5 Gew%, bezogen auf die Gesamtmasse der Feststoffmischung bzw. auf die Gesamtmasse der Suspension abzüglich der Masse der Trägerflüssigkeit.

Der Gesamtanteil der erfindungsgemäßen Mischung an Phenolharz aus der Gruppe der Novolake und Vernetzungsmittel beträgt bevorzugt 0,5 Gew% bis 5 Gew%, besonders bevorzugt 1 Gew% bis 4 Gew%, bezogen auf die Gesamtmasse der Feststoffmischung bzw. auf die Gesamtmasse der Suspension abzüglich der Masse der Trägerflüssigkeit.

Die Mischung gemäß dem dritten Aspekt der vorliegenden Erfindung zur Herstellung einer Elektrode zeichnet sich dadurch aus, dass der Massenanteil der Trägerflüssigkeit relativ niedrig ist, oder gar keine Trägerflüssigkeit eingesetzt wird. Dies ist möglich, da die erfindungsgemäßen Bindemittelsysteme eine hohe Löslichkeit aufweisen. Ein geringer Bedarf an Trägerflüssigkeit erlaubt es, Ressourcen zu sparen und den Energiebedarf für die Entfernung der Trägerflüssigkeit bei der Elektrodenherstellung zu minimieren.

Bevorzugt ist in einer erfindungsgemäßen Mischung zur Herstellung von Elektroden, insbesondere Kathoden, für elektrochemische Zellen die Konzentration von N-Methyl-2-Pyrrolidon 0,01 Gew% oder kleiner bezogen auf die Gesamtmasse der erfindungsgemäßen Mischung. Besonders bevorzugt enthält die erfindungsgemäße Mischung zur Herstellung von Elektroden, insbesondere Kathoden, für elektrochemische Zellen kein N-Methyl-2-Pyrrolidon.

Bevorzugt ist in der erfindungsgemäßen Mischung der Anteil an Produkten von Vernetzungsreaktionen des Phenolharzes aus der Gruppe der Novolake mit dem Vernetzungsmittel 0,01 Gew% oder kleiner bezogen auf die Gesamtmasse der erfindungsgemäßen Mischung. Besonders bevorzugt ist in der erfindungsgemäßen Mischung noch gar keine Vernetzung des Phenolharzes aus der Gruppe der Novolake erfolgt.

Bevorzugt enthält eine erfindungsgemäße Mischung Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, bezogen auf die Gesamtmasse der Mischung. Besonders bevorzugt enthält eine erfindungsgemäße Mischung keine Bestandteile aus der Gruppe bestehend aus vulkanisierten natürlichen und synthetischen Kautschuken, denn es hat sich gezeigt, dass - anders als in den aus US 2013/0323592 A1 bekannten Mischungen zur Herstellung von Elektroden für elektrochemische Zellen - Bestandteile aus der Gruppe bestehend aus vulkanisierten natürlichen und synthetischen Kautschuken nicht erforderlich sind, um die oben definierten Anforderungen zu erfüllen.

Eine besonders bevorzugte erfindungsgemäße Suspension zur Herstellung einer Elektrode, insbesondere Kathode, für eine elektrochemische Zelle umfasst:
das erfindungsgemäß besonders bevorzugte Bindemittelsystem gemäß dem ersten Aspekt wie oben offenbart, und
(c) ein elektrochemisch aktives Material, das in der Lage ist, Alkalimetallkationen beim Laden einer elektrochemischen Zelle reversibel zu deinterkalieren und beim Entladen zu interkalieren,
   wobei das Massenverhältnis des elektrochemisch aktiven Materials zum Phenolharz aus der Gruppe der Novolake im Bereich von 18:1 bis 300:1 liegt,
(d) ein elektrochemisch inaktives elektronisch leitfähiges Material ausgewählt aus der Gruppe bestehend aus Kohlenstoff-Nanofasern, Kohlenstoff-Nanotubes, Graphen, Carbon Black, Ruß, Acetylenruß, Ketjenblack, Graphit, Koks und Graphenoxid,
   wobei das Massenverhältnis des Phenolharzes aus der Gruppe der Novolake zum elektrochemisch inaktiven elektronisch leitfähigen Material im Bereich von 0,5 bis 5,0 liegt,
wobei die Mischung einen Anteil an Trägerflüssigkeit von 10 bis 35 Gew%, besonders bevorzugt 15 bis 28 Gew% aufweist,
wobei die Trägerflüssigkeit bevorzugt eine oder mehrere Verbindungen mit einer oder mehreren Carbonylgruppen pro Molekül enthält und weiter bevorzugt ausgewählt ist aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus,
wobei der Anteil an N-Methyl-2-Pyrrolidon 0,01 Gew% oder kleiner ist, bezogen auf die Gesamtmasse der Mischung,
wobei der Anteil an Phenolharz aus der Gruppe der Novolake 0,3 Gew% bis 4 Gew% beträgt, bevorzugt 0,5 Gew% bis 3,5 Gew%, bezogen auf die Gesamtmasse der Mischung abzüglich der Masse der Trägerflüssigkeit,
   und/oder
wobei der Gesamtanteil an Phenolharz aus der Gruppe der Novolake und Vernetzungsmittel 0,5 Gew% bis 5 Gew% beträgt, bevorzugt 1 Gew% bis 4 Gew%, bezogen auf die Gesamtmasse der Mischung abzüglich der Masse der Trägerflüssigkeit.

Ein vierter Aspekt der vorliegenden Erfindung betrifft die Verwendung einer erfindungsgemäßen Mischung gemäß dem dritten Aspekt der vorliegenden Erfindung wie oben beschrieben zur Herstellung einer Elektrode, insbesondere einer Kathode, für eine elektrochemische Zelle. Hinsichtlich geeigneter und bevorzugter erfindungsgemäßer Mischungen wird auf die obigen Ausführungen zum dritten Aspekt der vorliegenden Erfindung verwiesen. Bevorzugt wird eine erfindungsgemäße Mischung mit den oben als bevorzugt gekennzeichneten Merkmalen verwendet.

Ein fünfter Aspekt der vorliegenden Erfindung betrifft eine Elektrode, insbesondere Kathode, für eine elektrochemische Zelle, wobei die Elektrode einen Stromabnehmer umfasst und eine auf einer Oberfläche des Stromabnehmers angeordnete Aktivschicht umfassend
- das Produkt einer Vernetzungsreaktion zwischen dem Phenolharz aus der Gruppe der Novolake und dem Vernetzungsmittel eines Bindemittelsystems gemäß dem ersten Aspekt wie oben beschrieben,
   sowie
   (c) ein elektrochemisch aktives Material,
      und optional
   (d) ein elektrochemisch inaktives elektronisch leitfähiges Material,
      und optional
   (e) einen festen Elektrolyten.

Im Kontext der vorliegenden Beschreibung bezeichnet der Begriff "Aktivschicht" die ein elektrochemisch aktives Material (wie oben definiert) enthaltende Schicht einer Elektrode einer elektrochemischen Zelle.

Eine erfindungsgemäße Elektrode enthält das Produkt einer Vernetzungsreaktion zwischen dem Phenolharz aus der Gruppe der Novolake und dem Vernetzungsmittel eines Bindemittelsystems gemäß dem ersten Aspekt wie oben beschrieben, d.h. das Produkt der Vernetzungsreaktion des Phenolharzes aus der Gruppe der Novolake eines erfindungsgemäßen Bindemittelsystems mit dem Vernetzungsmittel dieses erfindungsgemäßen Bindemittelsystems, d.h. das Vernetzungsprodukt des entsprechenden Bindemittelsystems.

Hinsichtlich geeigneter und bevorzugter Phenolharze aus der Gruppe der Novolake und Vernetzungsmittel wird auf die obigen Ausführungen zum ersten Aspekt der vorliegenden Erfindung verwiesen. Bevorzugt enthält eine erfindungsgemäße Elektrode das Produkt einer Vernetzungsreaktion zwischen dem Phenolharz aus der Gruppe der Novolake und dem Vernetzungsmittel eines erfindungsgemäßen Bindemittelsystems mit den oben als bevorzugt gekennzeichneten Merkmalen.

Hinsichtlich geeigneter und bevorzugter elektrochemisch aktiver Materialien wird auf die obigen Ausführungen zum dritten Aspekt der vorliegenden Erfindung verwiesen. Das in der erfindungsgemäßen Elektrode enthaltene elektrochemisch aktive Material ist bevorzugt unter den oben als bevorzugt gekennzeichneten elektrochemisch aktiven Materialien ausgewählt. Bevorzugt ist das elektrochemisch aktive Material ein Kathoden-Aktivmaterial, und somit die erfindungsgemäße Elektrode bevorzugt eine Kathode.

Hinsichtlich geeigneter und bevorzugter elektrochemisch inaktiver elektronisch leitfähiger Materialien wird auf die obigen Ausführungen zum dritten Aspekt der vorliegenden Erfindung verwiesen. Ist in der erfindungsgemäßen Elektrode ein elektrochemisch inaktives elektronisch leitfähiges Material enthalten, so ist dieses bevorzugt unter den oben als bevorzugt gekennzeichneten elektrochemisch inaktiven elektronisch leitfähigen Materialien ausgewählt.

Hinsichtlich geeigneter und bevorzugter fester Elektrolyte wird auf die obigen Ausführungen zum dritten Aspekt der vorliegenden Erfindung verwiesen. Ist in der erfindungsgemäßen Elektrode ein fester Elektrolyt enthalten, so ist dieser bevorzugt unter den oben als bevorzugt gekennzeichneten festen Elektrolyten ausgewählt.

In der Aktivschicht der erfindungsgemäßen Elektrode liegen das elektrochemisch aktive Material, das elektrochemisch inaktive elektronisch leitfähige Material (sofern vorhanden) und der feste Elektrolyt (sofern vorhanden) in Form von Partikeln vor, die durch das Produkt einer Vernetzungsreaktion zwischen dem Phenolharz aus der Gruppe der Novolake und dem Vernetzungsmittel eines erfindungsgemäßen Bindemittelsystems in der Aktivschicht gebunden sind. Das Vernetzungsprodukt des erfindungsgemäßen Bindemittelsystems bindet die Partikel des elektrochemisch aktiven Materials, die Partikel des elektrochemisch inaktiven elektronisch leitfähigen Materials (sofern vorhanden) und die Partikel des festen Elektrolyten (sofern vorhanden) in die Aktivschicht der erfindungsgemäßen Elektrode ein.

Die Aktivschicht der erfindungsgemäßen Elektrode ist auf einer Oberfläche des Stromabnehmers angeordnet. Geeignete Stromabnehmer umfassen oder bestehen aus einem oder mehreren Materialien aus der Gruppe bestehend aus Kupfer, rostfreiem Stahl, Aluminium, Nickel und Titan. Bevorzugt sind Stromabnehmer aus Kupfer oder Aluminium, besonders bevorzugt aus Aluminium. Bevorzugt hat der Stromabnehmer die Form eines Blechs, einer Folie, eines Films, einer porösen Struktur, eines Netzwerks, eines Gitters oder eines Schaums. Besonders bevorzugt sind Stromabnehmer in Form von Metallblechen aus Kupfer oder Aluminium, besonders bevorzugt aus Aluminium. Das Vernetzungsprodukt des erfindungsgemäßen Bindemittelsystems bindet die Aktivschicht der erfindungsgemäßen Elektrode an die Oberfläche des Stromabnehmers.

Der Gesamtanteil des Produkts der Vernetzungsreaktion zwischen dem Phenolharz aus der Gruppe der Novolake und dem Vernetzungsmittel des erfindungsgemäßen Bindemittelsystems an der Aktivschicht der erfindungsgemäßen Elektrode beträgt bevorzugt 0,5 Gew% bis 5 Gew%, besonders bevorzugt 1 Gew% bis 4 Gew%, bezogen auf die Gesamtmasse der Aktivschicht der erfindungsgemäßen Elektrode.

Die Elektrode gemäß dem fünften Aspekt der vorliegenden Erfindung zeichnet sich dadurch aus, dass der Massenanteil des Produkts der Vernetzungsreaktion zwischen dem Phenolharz aus der Gruppe der Novolake und dem Vernetzungsmittel des erfindungsgemäßen Bindemittelsystems an der Aktivschicht der Elektrode ziemlich niedrig ist. Dies ist möglich, da erfindungsgemäße Bindemittelsysteme bereits in geringer Konzentration eine ausreichende Kohäsion innerhalb der Aktivschicht der Elektrode und eine ausrechende Adhäsion der Aktivschicht am Stromabnehmer bewirken. Eine hohe Konzentration des elektrochemisch aktiven Materials relativ zum Produkt der Vernetzungsreaktion des erfindungsgemäßen Bindemittelsystems ermöglicht Elektroden mit hoher Energiedichte.

Bevorzugt ist eine erfindungsgemäße Elektrode umfassend eine Aktivschicht mit einer flächenbezogenen Masse (Flächenbeladung) im Bereich von 8 mg/cm² bis 40 mg/cm², bevorzugt 10 mg/cm² bis 30 mg/cm².

Bevorzugt ist eine erfindungsgemäße Elektrode umfassend eine Aktivschicht mit einer Dichte im Bereich von 1,0 g/cm³ bis 4,0 g/cm³, bevorzugt 1,5 g/cm³ bis 3,0 g/cm³. Für Aktivschichten enthaltend Lithium-Nickel-Cobalt-Mangan-Mischoxide (sogenannte "NCM") als elektrochemisch aktives Material ist in bestimmten Fällen eine Dichte von 2,0 g/cm³ bis 3,0 g/cm³ bevorzugt.

Die Dichte wird ermittelt als Quotient aus der flächenbezogenen Masse (Flächenbeladung) und der Schichtdicke der Aktivschicht der erfindungsgemäßen Elektrode.

Besonders bevorzugt ist eine erfindungsgemäße Elektrode umfassend eine Aktivschicht mit einer flächenbezogenen Masse (Flächenbeladung) im Bereich von 8 mg/cm² bis 40 mg/cm², bevorzugt 10 mg/cm² bis 30 mg/cm² und einer Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt mit einer Dichte im Bereich von 2,0 g/cm³ bis 3,0 g/cm³.

Geeignete Verfahren zur Herstellung derartiger erfindungsgemäßer Elektroden werden weiten unten beschrieben.

Bevorzugt enthält eine erfindungsgemäße Elektrode Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, bezogen auf die Gesamtmasse der Aktivschicht. Besonders bevorzugt enthält eine erfindungsgemäße Elektrode keine Bestandteile aus der Gruppe bestehend aus vulkanisierten natürlichen und synthetischen Kautschuken, denn es hat sich gezeigt, dass - anders als in den aus US 2013/0323592 A1 bekannten Elektroden für elektrochemische Zellen - Bestandteile aus der Gruppe bestehend aus vulkanisierten natürlichen und synthetischen Kautschuken nicht erforderlich sind, um die oben definierten Anforderungen zu erfüllen.

Eine besonders bevorzugte erfindungsgemäße Elektrode umfasst einen Stromabnehmer und eine auf einer Oberfläche des Stromabnehmers angeordnete Aktivschicht umfassend
- das Produkt einer Vernetzungsreaktion zwischen dem Phenolharz aus der Gruppe der Novolake und dem Vernetzungsmittel eines erfindungsgemäß besonders bevorzugten Bindemittelsystems gemäß dem ersten Aspekt wie oben offenbart
   c) ein elektrochemisch aktives Material, das in der Lage ist, Alkalimetallkationen beim Laden einer elektrochemischen Zelle reversibel zu deinterkalieren und beim Entladen zu interkalieren
   d) ein elektrochemisch inaktives elektronisch leitfähiges Material ausgewählt aus der Gruppe bestehend aus Kohlenstoff-Nanofasern, Kohlenstoff-Nanotubes, Graphen, Carbon Black, Ruß, Acetylenruß, Ketjenblack, Graphit, Koks und Graphenoxid,
wobei
der Gesamtanteil des Produkts der Vernetzungsreaktion zwischen dem Phenolharz aus der Gruppe der Novolake und dem Vernetzungsmittel des erfindungsgemäßen Bindemittelsystems an der Aktivschicht der erfindungsgemäßen Elektrode 0,5 Gew% bis 5 Gew%, besonders bevorzugt 1 Gew% bis 4 Gew% beträgt, bezogen auf die Gesamtmasse der Aktivschicht der Elektrode,
die Aktivschicht eine Dichte im Bereich von 1,0 g/cm³ bis 4,0 g/cm³, bevorzugt 1,5 g/cm³ bis 3,0 g/cm³ (insbesondere für Aktivschichten enthaltend Lithium-Nickel-Cobalt-Mangan-Mischoxide (sogenannte "NCM") als elektrochemisch aktives Material weiter bevorzugt eine Dichte im Bereich von 2,0 g/cm³ bis 3,0 g/cm³) und eine flächenbezogene Masse im Bereich von 8 mg/cm² bis 40 mg/cm², bevorzugt 10 mg/cm² bis 30 mg/cm² aufweist,
und die Aktivschicht Bestandteile aus der Gruppe bestehend aus vulkanisierten natürlichen und synthetischen Kautschuken in einer Gesamtkonzentration von 0,5 Gew% oder weniger, bevorzugt 0,1 Gew% oder weniger, enthält bezogen auf die Gesamtmasse der Aktivschicht.

Ein sechster Aspekt der vorliegenden Erfindung betrifft ein Verfahren zur Herstellung einer Elektrode, insbesondere Kathode, für eine elektrochemische Zelle. Das erfindungsgemäße Verfahren umfasst die Schritte
(i) Bereitstellen einer Mischung gemäß dem dritten Aspekt der Erfindung wie oben beschrieben,
(ii) Vernetzungsreaktion zwischen dem Phenolharz aus der Gruppe der Novolake und dem Vernetzungsmittel des in der Mischung enthaltenen Bindemittelsystems, wobei eine Aktivschicht enthaltend das Produkt der Vernetzungsreaktion zwischen dem Phenolharz aus der Gruppe der Novolake und dem Vernetzungsmittel des Bindemittelsystems resultiert.

Die in Schritt (i) bereitgestellte Mischung ist eine Feststoffmischung oder eine Suspension wie oben beschrieben. Hinsichtlich geeigneter und bevorzugter erfindungsgemäßer Mischungen für das erfindungsgemäße Verfahren wird auf die obigen Ausführungen zum dritten Aspekt der vorliegenden Erfindung verwiesen. Die in Schritt (i) bereitzustellende erfindungsgemäße Mischung gemäß dem dritten Aspekt wie oben beschrieben ist bevorzugt eine erfindungsgemäße Mischung mit den oben als bevorzugt gekennzeichneten Merkmalen.

In einer ersten Verfahrensvariante umfasst das erfindungsgemäße Verfahren die Schritte
(i) Bereitstellen einer Feststoffmischung gemäß dem dritten Aspekt der vorliegenden Erfindung wie oben beschrieben
(ii) Auftragen der in Schritt (i) bereitgestellten Feststoffmischung auf die Oberfläche eines Stromabnehmers und Vernetzungsreaktion zwischen dem Phenolharz aus der Gruppe der Novolake und dem Vernetzungsmittel des in der Feststoffmischung enthaltenen Bindemittelsystems, wobei eine Aktivschicht enthaltend das Produkt der Vernetzungsreaktion zwischen dem Phenolharz aus der Gruppe der Novolake und dem Vernetzungsmittel des erfindungsgemäßen Bindemittelsystems resultiert.

In einer zweiten Verfahrensvariante umfasst das erfindungsgemäße Verfahren die Schritte
(i) Bereitstellen einer Mischung in Form einer Suspension gemäß dem dritten Aspekt der vorliegenden Erfindung wie oben beschrieben
(ii) Auftragen der in Schritt (i) bereitgestellten Suspension auf die Oberfläche eines Stromabnehmers und Vernetzungsreaktion zwischen dem Phenolharz aus der Gruppe der Novolake und dem Vernetzungsmittel des in der Suspension enthaltenen Bindemittelsystems, wobei eine Aktivschicht enthaltend das Produkt der Vernetzungsreaktion zwischen dem Phenolharz aus der Gruppe der Novolake und dem Vernetzungsmittel des erfindungsgemäßen Bindemittelsystems resultiert.

Wird zur Herstellung der erfindungsgemäßen Suspension ein erfindungsgemäßes Bindemittelsystem enthaltend ein Lösungsmittel (wie oben beschrieben) eingesetzt, so bildet vorzugsweise das mit dem Bindemittelsystem eingetragene Lösungsmittel die Trägerflüssigkeit der erfindungsgemäßen Suspension zur Herstellung einer Elektrode für eine elektrochemische Zelle, und es ist nicht erforderlich, weitere Trägerflüssigkeit zuzugeben.

Die Trägerflüssigkeit der Suspension kann eine einzelne Substanz sein oder eine Mischung mehrerer Substanzen. Es versteht sich dabei von selbst, dass Substanzen, die gegenüber einem Phenolharz aus der Gruppe der Novolake als Vernetzungsmittel wirken, nicht als Trägerflüssigkeit eingesetzt werden, und nicht als Trägerflüssigkeit zu zählen sind.

Bevorzugte Trägerflüssigkeiten haben einen Flammpunkt von 25 °C oder mehr und einen Siedepunkt im Bereich von 25 °C bis 200 °C, bevorzugt einen Flammpunkt von 40 °C oder mehr und einen Siedepunkt im Bereich von 140 °C bis 170 °C.

Bevorzugt enthält die Trägerflüssigkeit eine oder mehrere Verbindungen mit einer oder mehreren Carbonylgruppen pro Molekül. Weiter bevorzugt ist die Trägerflüssigkeit ausgewählt aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus. Besonders bevorzugt enthält oder ist die Trägerflüssigkeit Cyclohexanon.

Der Anteil an Trägerflüssigkeit beträgt bevorzugt 10 Gew% bis 35 Gew%, besonders bevorzugt 15 Gew% bis 28 Gew%, bezogen auf die Gesamtmasse der Suspension.

Einzelne Bestandteile der erfindungsgemäßen Suspension können in der Trägerflüssigkeit zumindest teilweise gelöst sein, insbesondere das Phenolharz aus der Gruppe der Novolake und das Vernetzungsmittel. Elektrochemisch aktive Materialien und elektrochemisch inaktive elektronisch leitfähiges Materialien liegen typischerweise als in der Trägerflüssigkeit suspendierte Partikel vor.

In bestimmten Fällen umfasst Schritt (i) des erfindungsgemäßen Verfahrens das Herstellen einer Suspension aus einer Feststoffmischung gemäß dem oben beschriebenen dritten Aspekt der Erfindung. Dabei umfasst Schritt (i) die Teilschritte
- Bereitstellen einer erfindungsgemäßen Feststoffmischung gemäß dem dritten Aspekt wie oben beschrieben,
- Zugeben einer Trägerflüssigkeit zu der Feststoffmischung, wobei eine Suspension resultiert.

In Schritt (ii) des erfindungsgemäßen Verfahrens erfolgt eine Vernetzungsreaktion zwischen dem Phenolharz aus der Gruppe der Novolake und dem Vernetzungsmittel des in der in Schritt (i) bereitgestellten Mischung enthaltenen erfindungsgemäßen Bindemittelsystems, wobei eine Aktivschicht enthaltend das Produkt der Vernetzungsreaktion zwischen dem Phenolharz aus der Gruppe der Novolake und dem Vernetzungsmittel des Bindemittelsystems resultiert, d.h. in Schritt (ii) des erfindungsgemäßen Verfahrens erfolgt eine Vernetzungsreaktion des in der in Schritt (i) bereitgestellten Mischung enthaltenen erfindungsgemäßen Bindemittelsystems.

In Schritt (ii) des erfindungsgemäßen Verfahrens wird das Phenolharz aus der Gruppe der Novolake durch das Vernetzungsmittel zumindest teilweise vernetzt. Durch die Vernetzungsreaktion des erfindungsgemäßen Bindemittelsystems entsteht eine Aktivschicht, in welche die in der in Schritt (i) bereitgestellten Mischung enthaltenen Partikel des elektrochemisch aktiven Materials, des elektrochemisch inaktiven elektronisch leitfähigen Materials (sofern vorhanden) und des festen Elektrolyten (sofern vorhanden) durch das Produkt der Vernetzungsreaktion des erfindungsgemäßen Bindemittelsystems gebunden sind.

Im Unterschied zu dem Verfahren gemäß US 2013/0323592 A1 erfolgt im erfindungsgemäßen Verfahren die Vernetzungsreaktion des Phenolharzes aus der Gruppe der Novolake in-situ bei der Elektrodenherstellung.

Die Vernetzungsreaktion zwischen dem Phenolharz aus der Gruppe der Novolake und dem Vernetzungsmittel des Bindemittelsystems wird in Schritt (ii) des erfindungsgemäßen Verfahrens bevorzugt thermisch induziert, d.h. die Vernetzungsreaktion erfolgt ohne die Mitwirkung eines Katalysators. Verfahrensvarianten, in denen die Vernetzungsreaktion zwischen dem Phenolharz aus der Gruppe der Novolake und dem Vernetzungsmittel des Bindemittelsystems in Schritt (ii) des erfindungsgemäßen Verfahrens die Mitwirkung eines Katalysators erfordert, wobei der Katalysator zweckmäßigerweise als Bestandteil der erfindungsgemäßen Mischung bereitgestellt wird wie oben beschrieben, sind erfindungsgemäß weniger bevorzugt.

In Schritt (ii) der zweiten Verfahrensvariante des erfindungsgemäßen Verfahrens wird zunächst die Trägerflüssigkeit der in Schritt (i) bereitgestellten Suspension durch Verdampfen entfernt. Daher ist es vorteilhaft, wenn die Suspension einen möglichst geringen Anteil an Trägerflüssigkeit enthält und die Trägerflüssigkeit einen möglichst niedrigen Siedepunkt hat.

In Schritt (ii) des erfindungsgemäßen Verfahrens erfolgt das thermische Induzieren der Vernetzungsreaktion bevorzugt durch Erwärmen auf eine Temperatur im Bereich von 40 °C bis 220, bevorzugt 80 °C bis 160 °C, besonders bevorzugt 120 °C bis 150 °C, bevorzugt für eine Zeitdauer von 90 Minuten oder weniger, weiter bevorzugt 10 Minuten oder weniger, besonders bevorzugt 5 Minuten oder weniger. Bevorzugt wird in Schritt (ii) mindestens 20 Sekunden lang erwärmt. Durch das Erwärmen wird die Vernetzungsreaktion thermisch induziert und die Trägerflüssigkeit verdampft.

Die geeignete Temperatur für die thermisch induzierte Vernetzung hängt von der Art des Vernetzungsmittels ab und wird von der Fachperson entsprechend ausgewählt auf Basis seines Fachwissens oder anhand von Vorversuchen.

Für die bevorzugten Vernetzungsmittel aus der Gruppe bestehend aus Epoxiden mit zwei oder mehr Epoxidgruppen pro Molekül ist eine Temperatur von 120°C bis 150 °C bevorzugt.

Das erfindungsgemäße Verfahren zeichnet sich dadurch aus, dass - insbesondere bei Verwendung einer Mischung enthaltend eines der als bevorzugt gekennzeichneten erfindungsgemäßen Bindemittelsysteme - nur eine relativ kurze Erwärmung nötig ist, um die Vernetzungsreaktion thermisch zu induzieren und die Trägerflüssigkeit zu verdampfen, so dass der Energiebedarf für die Elektrodenherstellung begrenzt wird.

Besonders bevorzugt erfolgt in Schritt (ii) des erfindungsgemäßen Verfahrens das Herstellen der Aktivschicht durch Filmziehen der erfindungsgemäßen Suspension mit anschließendem Erwärmen auf eine Temperatur im Bereich von 40 °C bis 180 °C, bevorzugt 80 °C bis 160 °C, besonders bevorzugt 120 °C bis 150 °C, bevorzugt für eine Zeitdauer von 90 Minuten oder weniger, weiter bevorzugt 10 Minuten oder weniger, besonders bevorzugt 5 Minuten oder weniger. Bevorzugt wird in Schritt (ii) mindestens 20 Sekunden lang erwärmt. Durch das Erwärmen wird die Vernetzungsreaktion thermisch induziert und die Trägerflüssigkeit verdampft.

Bevorzugt umfasst ein erfindungsgemäßes Verfahren den weiteren Schritt
(iii) Kalandrieren der in Schritt (ii) resultierenden Aktivschicht.

Durch das Kalandrieren in Schritt (iii) des erfindungsgemäßen Verfahrens wird die Dichte der Aktivschicht erhöht, d.h. die Aktivschicht wird verdichtet.

Bevorzugt ist ein erfindungsgemäßes Verfahren, wobei eine Aktivschicht gebildet wird mit einer flächenbezogenen Masse im Bereich von 8 mg/cm² bis 40 mg/cm², bevorzugt 10 mg/cm² bis 30 mg/cm². Die flächenbezogene Masse der Aktivschicht wird eingestellt durch die eingesetzte Menge an erfindungsgemäßer Mischung pro Flächeneinheit herzustellender Aktivschicht, d.h. pro cm² Fläche der Aktivschicht werden 8 mg bis 40 mg, bevorzugt 10 mg bis 30 mg der in Schritt (i) bereitgestellten Mischung eingesetzt.

Bevorzugt ist ein erfindungsgemäßes Verfahren, wobei eine Aktivschicht gebildet wird mit einer Dichte im Bereich von 1,0 g/cm³ bis 4,0 g/cm³, bevorzugt 1,5 g/cm³ bis 3,0 g/cm³. Für Aktivschichten enthaltend Lithium-Nickel-Cobalt-Mangan-Mischoxide (sogenannte "NCM") als elektrochemisch aktives Material ist in bestimmten Fällen eine Dichte von 2,0 g/cm³ bis 3,0 g/cm³ bevorzugt. Die Dichte der Aktivschicht wird eingestellt in Schritt (iii) des erfindungsgemäßen Verfahrens durch Kalandrieren der in Schritt (ii) resultierenden Aktivschicht. D.h. in Schritt (iii) des erfindungsgemäßen Verfahrens wird die in Schritt (ii) resultierende Aktivschicht bevorzugt auf eine Dichte im Bereich von 1,0 g/cm³ bis 4,0 g/cm³, bevorzugt 1,5 g/cm³ bis 3,0 g/cm³ kalandriert. Aktivschichten enthaltend Lithium-Nickel-Cobalt-Mangan-Mischoxide (sogenannte "NCM") als elektrochemisch aktives Material werden in bestimmten Fällen bevorzugt auf eine Dichte von 2,0 g/cm³ bis 3,0 g/cm³ kalandriert.

Die Dichte wird ermittelt als Quotient aus der flächenbezogene Masse der Aktivschicht und der Schichtdicke der Aktivschicht nach dem Kalandrieren in Schritt (iii) des erfindungsgemäßen Verfahrens, d.h. zur Ermittlung der Dichte werden die flächenbezogene Masse und die Schichtdicke nach dem Kalandrieren bestimmt.

Besonders bevorzugt ist ein erfindungsgemäßes Verfahren, wobei eine Aktivschicht gebildet wird mit einer flächenbezogenen Masse im Bereich von 8 mg/cm² bis 40 mg/cm², bevorzugt 10 mg/cm² bis 30 mg/cm² und einer Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt mit einer Dichte im Bereich von 2,0 g/cm³ bis 3,0 g/cm³.

In einer bevorzugten Variante umfasst Schritt (ii) des erfindungsgemäßen Verfahrens das Auftragen der in Schritt (i) bereitgestellten Mischung auf einen Stromabnehmer, insbesondere auf einen Stromabnehmer aus Aluminium wie oben beschrieben. Das Auftragen der erfindungsgemäßen Mischung auf den Stromabnehmer kann mit jeder geeigneten Technik erfolgen, z.B. durch Filmziehen, insbesondere mittels einer Rakel, oder durch Aufstreuen einer erfindungsgemäßen Feststoffmischung. In der auf die Oberfläche des Stromabnehmers aufgetragenen Mischungerfolgt eine Vernetzungsreaktion zwischen dem Phenolharz aus der Gruppe der Novolake und dem Vernetzungsmittel des in der Mischung enthaltenen Bindemittelsystems, wobei auf der Oberfläche des Stromabnehmers eine Aktivschicht enthaltend das Produkt der Vernetzungsreaktion zwischen dem Phenolharz aus der Gruppe der Novolake und dem Vernetzungsmittel des Bindemittelsystems resultiert.

In dieser bevorzugten Variante umfasst das erfindungsgemäße Verfahren die Schritte
(i) Bereitstellen einer Mischung gemäß dem dritten Aspekt der Erfindung wie oben beschrieben,
(ii) Auftragen der in Schritt (i) bereitgestellten Mischung auf die Oberfläche eines Stromabnehmers und Vernetzungsreaktion zwischen dem Phenolharz aus der Gruppe der Novolake und dem Vernetzungsmittel des in der Mischung enthaltenen Bindemittelsystems, wobei auf der Oberfläche des Stromabnehmers eine Aktivschicht enthaltend das Produkt der Vernetzungsreaktion zwischen dem Phenolharz aus der Gruppe der Novolake und dem Vernetzungsmittel des erfindungsgemäßen Bindemittelsystems resultiert,
(iii) optional Kalandrieren der in Schritt (ii) resultierenden Aktivschicht.

Bevorzugt wird in Schritt (ii) die in Schritt (i) bereitgestellte Mischung auf die Oberfläche eines Stromabnehmers in einer flächenbezogenen Masse im Bereich von 8 mg/cm² bis 40 mg/cm², bevorzugt 10 mg/cm² bis 30 mg/cm² aufgetragen, d.h. pro cm² Fläche des Stromabnehmers werden 8 mg bis 40 mg, bevorzugt 10 mg bis 30 mg der in Schritt (i) bereitgestellten Mischung aufgetragen.

Bevorzugt wird in Schritt (iii) die in Schritt (ii) resultierende Aktivschicht auf eine Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt auf eine Dichte im Bereich von 2,0 g/cm³ bis 3,0 g/cm³ kalandriert.

Besonders bevorzugt wird in Schritt (ii) die in Schritt (i) bereitgestellten Mischung auf die Oberfläche eines Stromabnehmers in einer flächenbezogenen Masse im Bereich von 8 mg/cm² bis 40 mg/cm², bevorzugt 10 mg/cm² bis 30 mg/cm², aufgetragen, und in Schritt (iii) wird die in Schritt (ii) resultierende Aktivschicht auf eine Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt auf eine Dichte im Bereich von 2,0 g/cm³ bis 3,0 g/cm³ kalandriert.

Ein besonders bevorzugtes erfindungsgemäßes Verfahren umfasst die Schritte:
(i) Bereitstellen einer Mischung gemäß dem dritten Aspekt der Erfindung wie oben beschrieben, wobei die Suspension einen Anteil an Trägerflüssigkeit von 15 Gew% bis 28 Gew% hat, bezogen auf die Gesamtmasse der Suspension,
(ii) Auftragen der in Schritt (i) bereitgestellten Mischung in einer flächenbezogenen Masse im Bereich von 8 mg/cm² bis 40 mg/cm², bevorzugt 10 mg/cm² bis 30 mg/cm² auf die Oberfläche eines Stromabnehmers mittels Filmziehen, und thermisch induzierte Vernetzungsreaktion zwischen dem Phenolharz aus der Gruppe der Novolake und dem Vernetzungsmittel des in der Suspension enthaltenen Bindemittelsystems durch Erwärmen auf eine Temperatur im Bereich von 40 °C bis 180 °C, bevorzugt 80 °C bis 160 °C, besonders bevorzugt 120 °C bis 150 °C, für eine Zeitdauer von 90 Minuten oder weniger, bevorzugt 10 Minuten oder weniger, besonders bevorzugt 5 Minuten oder weniger, wobei auf der Oberfläche des Stromabnehmers eine Aktivschicht enthaltend das Produkt der Vernetzungsreaktion zwischen dem Phenolharz aus der Gruppe der Novolake und dem Vernetzungsmittel des erfindungsgemäßen Bindemittelsystems resultiert,
(iii) Kalandrieren der in Schritt (ii) resultierenden Aktivschicht auf eine Dichte im Bereich von 1,0 g/cm³ bis 4,0 g/cm³, bevorzugt 1,5 g/cm³ bis 3,0 g/cm³, insbesondere für Aktivschichten enthaltend Lithium-Nickel-Cobalt-Mangan-Mischoxide (sogenannte "NCM") als elektrochemisch aktives Material weiter bevorzugt auf eine Dichte im Bereich von 2,0 g/cm³ bis 3,0 g/cm³.

In bestimmten Varianten des erfindungsgemäßen Verfahrens umfasst das Bereitstellen der Mischung in Schritt (i) das Herstellen eines Phenolharzes aus der Gruppe der Novolake.

Dabei umfasst das Bereitstellen der Mischung in Schritt (i) das Herstellen eines Phenolharzes aus der Gruppe der Novolake durch Reaktion von Formaldehyd und Phenolmonomeren bei einer Temperatur von mindestens 80 °C, bevorzugt bei einer Temperatur im Bereich von 100 °C bis 110 °C, wobei das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90, und anschließende Destillation bei einem Druck von 10 kPa oder weniger und einer Temperatur von 130 °C oder mehr.

Die Edukte Formaldehyd und Phenolmonomere werden für die Reaktion so dosiert, dass das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90. Die Reaktion erfolgt bei einer Temperatur von mindestens 80°C, bevorzugt bei einer Temperatur im Bereich von 100 °C bis 110 °C. Danach wird eine Destillation bei einem Druck von 10 kPa oder weniger und einer Temperatur von 130 °C oder mehr durchgeführt. Durch die Destillation werden Wasser und nicht umgesetzte Phenolmonomere so weit wie möglich entfernt.

Bevorzugt wird das Phenolharz aus der Gruppe der Novolake hergestellt durch Reaktion von Formaldehyd und Phenolmonomeren bei einer Temperatur im Bereich von 100 °C bis 110 °C, wobei das molare Verhältnis von Formaldehyd zu Phenolmonomeren im Bereich von 0,35 bis 0,95, weiter bevorzugt im Bereich von 0,4 bis 0,90, besonders bevorzugt im Bereich von 0,65 bis 0,90 liegt, und anschließende Destillation bei einem Druck von 10 kPa oder weniger und einer Temperatur von 130 °C oder mehr.

Der Begriff "Phenolmonomere" umfasst hierbei sowohl unsubstituiertes Phenol (Hydroxybenzen) als auch substituierte Phenole, d.h. Phenole, bei denen sich an einer, zwei oder drei Positionen des Phenolrings anstelle eines Wasserstoffatoms ein Substituent befindet. Unsubstituiertes Phenol bildet in einem Phenolharz aus der Gruppe der Novolake Struktureinheiten (a1) wie oben definiert. Bevorzugte substituierte Phenole sind solche, die im Phenolharz aus der Gruppe der Novolake Struktureinheiten (a2) und (a3) wie oben definiert bilden. Besonders bevorzugte substituierte Phenole sind ausgewählt aus der Gruppe bestehend aus Cardanol und o-Kresol.

Es werden eine oder mehrere Sorten von Phenolmonomeren eingesetzt, erfindungsgemäß bevorzugt wird
- ausschließlich (Hydroxybenzen) als Phenolmonomer eingesetzt, oder
- Hydroxybenzen und Struktureinheiten (a2) wie oben beschrieben bildende Phenolmonomere,
- Hydroxybenzen und Struktureinheiten (a3) wie oben beschrieben bildende Phenolmonomere, oder
- Hydroxybenzen, Struktureinheiten (a2) wie oben beschrieben bildende Phenolmonomere und Struktureinheiten (a3) wie oben beschrieben bildende Phenolmonomere
eingesetzt, wobei als Struktureinheiten (a2) bildendes Phenolmonomer jeweils bevorzugt Cardanol eingesetzt wird und als Struktureinheiten (a3) bildendes Phenolmonomer jeweils bevorzugt o-Kresol.

In einer ersten Verfahrensvariante erfolgt die Reaktion von Formaldehyd und Phenolmonomeren, wobei das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90, in Gegenwart eines Katalysators ausgewählt aus der Gruppe der Säuren, bevorzugt ausgewählt aus der Gruppe bestehend aus Oxalsäure, Salicylsäure, Schwefelsäure, p-Toluolsulfonsäure, Salzsäure und Phosphorsäure.

In eine zweiten Verfahrensvariante umfasst die Reaktion von Formaldehyd und Phenolmonomeren, wobei das molare Verhältnis von Formaldehyd zu Phenolmonomeren im Bereich von 0,27 bis 1,00 liegt, bevorzugt im Bereich von 0,35 bis 0,95, weiter bevorzugt im Bereich von 0,4 bis 0,95, besonders bevorzugt im Bereich von 0,65 bis 0,90, eine erste Stufe in Gegenwart eines Katalysators ausgewählt aus der Gruppe der Salze zweiwertiger Metallionen, bevorzugt Salze zweiwertige Ionen von Metallen aus der Gruppe bestehend aus Mn, Zn, Cd, Mg, Co, Ni, Fe, Pb, Ca und Ba, insbesondere Zinksalze und eine anschließende zweite Stufe in Gegenwart eines Katalysators ausgewählt aus der Gruppe der Säuren, bevorzugt ausgewählt aus der Gruppe bestehend aus Oxalsäure, Salicylsäure, Schwefelsäure, p-Toluolsulfonsäure, Salzsäure und Phosphorsäure.

Ein siebenter Aspekt der vorliegenden Erfindung betrifft eine elektrochemische Zelle umfassend eine erfindungsgemäße Elektrode, insbesondere Kathode, gemäß dem fünften Aspekt wie oben beschrieben und/oder hergestellt nach einem Verfahren gemäß dem sechsten Aspekt wie oben beschrieben.

Hinsichtlich geeigneter und bevorzugter erfindungsgemäßer Elektroden wird auf die obigen Ausführungen zum fünften Aspekt der vorliegenden Erfindung verwiesen. Bevorzugt enthält eine erfindungsgemäße elektrochemische Zelle eine Elektrode, insbesondere Kathode, mit den oben als bevorzugt gekennzeichneten Merkmalen.

Hinsichtlich geeigneter und bevorzugter erfindungsgemäßer Herstellungsverfahren für Elektroden wird auf die obigen Ausführungen zum sechsten Aspekt der vorliegenden Erfindung verwiesen. Bevorzugt enthält eine erfindungsgemäße elektrochemische Zelle eine Elektrode, insbesondere Kathode, hergestellt nach einen Verfahren mit den oben als bevorzugt gekennzeichneten Merkmalen. Bevorzugt ist die erfindungsgemäße elektrochemische Zelle eine Lithium-Ionen-Batterie oder eine Natrium-Ionen-Batterie, wobei der Begriff Lithium-Ionen-Batterie bzw. Natrium-Ionen-Batterie jeweils wiederaufladbare Batterien einschließt.

Die vorliegende Erfindung wird nachfolgend durch Beispiele näher erläutert, sie ist jedoch nicht auf diese Beispiele beschränkt.

### Ausführungsbeispiele

### a) Herstellung und Charakterisierung der Novolake

### Rohstoffe:

Phenol: Borealis Polymers OY
Paraformaldehyd 91%: MY-CHEM GmbH
Formalin 49 %: Ineos Paraform
Oxalsäure: WeyIChem Lamotte SAS
Zinkacetat: BRENNTAG s.p.a.
Salicylsäure: Novacyl SAS
Ortho-Kresol: Sasol Chemie GmbH & Co KG
Cardanol: Cardolite specialty chemicals

### Charakterisierung der Novolake:

Gehalt an freiem monomerem Phenol: mittels HPLC mit UV-Detektor, Säule: Alltima C18, Dimension: 50 mm x 4,6 mm x 3 µm, Ofentemperatur: 55 °C, Fluss: 2 mL/min, Gegendruck: 23 MPa, Retentionszeit: 1,586, Injektionsvolumen: 5 µL, Wellenlänge: 271 nm, Stoppzeit: 5,50 min, Eluent: Wasser (+0,01 % Ameisensäure) und Methanol.
Schmelzviskosität: mittels Brookfield CAP 2000+, Temperatur: 120 oder 130 °C, Drehzahl: zwischen 5 und 10 U/min eingestellt. Holdtime: 120 s (Temperierung der Probe), Runtime: 60 s (Messung).
GPC: DIN-Norm 55672-1, GPC-Anlage: PSS SECcurity² GPC System (Agilent), ausgestattet mit Pumpe, Säulenofen, UV und RI Detektor. GPC-Trennsäulen: PSS SDV Kombination low (3xPSS 3 µm SDV 10³ Å 8x300 mm mit PSS 3mm SDV Vorsäule 8x50 mm), 201-0001, Kalibrierstandard Polystyren, Elutionsmittel: THF, Fluss: 1,0 mL/min, Ofentemperatur: 35 °C, Injektionsvolumen: 20 µL, Detektor: RI, Laufzeit: 35 min, Auswertegrenzen so gelegt, dass monomeres unsubstituiertes Phenol (Hydroxybenzen) nicht berücksichtigt wird.
NMR: extern an der Leibnitz-Universität Hannover, Institut für Organische Chemie, mittels Bruker Avance III Spektrometer bei 9.4 T (vL(1H) = 400 MHz) mit einem PRODIGY BBFO-Probenkopf, Lösungsmittel: DMSO-d₆, Experimente: 1H, 13C, 2D-HSQC, Messtemperatur: 298 K.

Folgende Novolake wurden hergestellt und getestet (die in Klammern angegebenen Beispiel-Nummern beziehen sich auf die weiter unten beschriebenen Tests):

### Novolak 1 (Beispiele 1, 2, 4 - 10, 13 - 20, 25)

Für die Herstellung von 1 kg Novolak werden Phenol (990,8 g, 10,5 mol), Wasser (80,0 g) und Oxalsäure (5,0 g) auf eine Temperatur im Bereich von 90 °C bis 92 °C geheizt. Eine 49%ige Formaldehydlösung (475,8 g, 7,8 mol Formaldehyd) wird langsam hinzugetropft und das Gemisch 30 min unter Rückfluss gerührt. Anschließend wird weitere Oxalsäure (0,2 g) hinzugegeben und, das Gemisch wird weitere 30 min lang unter Rückfluss gerührt. Es folgt eine atmosphärische Destillation bis zu einer Temperatur von 155 °C. Nachfolgend wird unter Vakuum (d.h. 10 kPa oder weniger) bei einer Temperatur von maximal 160 °C destilliert, bis der Gehalt an freiem monomeren Phenol unter 1,0 % und die Schmelzviskosität bei 100 - 200 Pa s bei 120 °C liegt.

Eine NMR-Analyse zeigt, dass die Verknüpfung der einzelnen Phenoleinheiten zufällig über die ortho- und para Position erfolgt.
GPC: *M*ₙ = 970 g/mol; *M*_{w} = 2820 g/mol; Ð = 2,90

### Novolak 2 (Bsp. 11):

Für die Herstellung von 1 kg Novolak werden Phenol (2120 g, 22,6 mol) und Oxalsäure (5,0 g) vorgelegt und auf eine Temperatur im Bereich von 90 °C bis 92 °C geheizt. Eine 49%ige Formaldehydlösung (386,6 g, 6,3 mol Formaldehyd) wird langsam und kontinuierlich hinzugetropft, und das Gemisch wird 150 min lang unter Rückfluss gerührt. Es folgt eine atmosphärische Destillation bis zu einer Temperatur von 150 °C. Nachfolgend wird unter Vakuum (d.h. 10 kPa oder weniger) bei einer Temperatur von maximal 150 °C destilliert, bis der Gehalt an freiem monomeren Phenol unter 1,0 % liegt.

Eine NMR-Analyse zeigt, dass die Verknüpfung der einzelnen Phenoleinheiten zufällig über die ortho- und para Position erfolgt.
GPC: *M*ₙ = 400 g/mol; *M*_{w} = 480 g/mol; Ð = 1,21

### Novolak 3 (Bsp. 12):

Für einen 1 kg Ansatz werden Phenol (742,3 g, 79,0 mol), Wasser (162,9 g) und Zinkacetat (6,6 g) vorgelegt und auf eine Temperatur von 90 °C geheizt. Paraformaldehyd (Gehalt an Formaldehyd 91 %, 77,7 g, 23,6 mol Formaldehyd) wird langsam und kontinuierlich bei 100 °C hinzudosiert, und das Gemisch wird 120 min lang unter Rückfluss gerührt. Im Anschluss wird Salicylsäure (13,2 g) in mehreren Portionen hinzudosiert Es folgt eine atmosphärische Destillation bis zu einer Temperatur von 150 °C. Nachfolgend wird unter Vakuum (d.h. 10 kPa oder weniger) bei einer Temperatur von maximal 160 °C destilliert, bis der Gehalt an freiem monomeren Phenol unter 1,0 % liegt.

Eine NMR-Analyse zeigt, dass die Verknüpfung der einzelnen Phenoleinheiten zu > 95 % über ortho-ortho oder ortho-para - Verknüpfung erfolgt.
GPC: *M*ₙ = 390 g/mol; *M*_{w} = 500 g/mol; Ð = 1,27

### Novolak 4 (Bsp. 21):

Phenol (652,7 g, 6,9 mol), Wasser (88,2 g) und Zinkacetat (6,6 g) werden vorgelegt und auf eine Temperatur von 90 °C geheizt. Paraformaldehyd (Gehalt an Formaldehyd 91 %, 176,1 g, 5,3 mol Formaldehyd) wird langsam und kontinuierlich bei 100 °C hinzudosiert, und das Gemisch wird 120 min lang unter Rückfluss gerührt. Im Anschluss wird Salicylsäure (13,2 g) in mehreren Portionen hinzudosiert. Es folgt eine atmosphärische Destillation bis zu einer Temperatur von 150 °C. Nachfolgend wird unter Vakuum (d.h. 10 kPa oder weniger) bei einer Temperatur von maximal 160 °C destilliert, bis der Gehalt an freiem monomeren Phenol unter 1,0 % liegt.

Eine NMR-Analyse zeigt, dass die Verknüpfung der einzelnen Phenoleinheiten zu > 95 % über ortho-ortho oder ortho-para - Verknüpfung erfolgt.
GPC: *M*ₙ = 890 g/mol; *M*_{w} = 2150 g/mol; Ð = 2,42

### Novolak 5 (Bsp. 22):

Für die Herstellung von 1 kg Novolak werden Phenol (1039 g, 11,1 mol) und Oxalsäure (3,7 g) auf eine Temperatur im Bereich von 90 bis 92 °C geheizt. Eine 49%ige Formaldehydlösung (527,4 g, 8,6 mol Formaldehyd) wird langsam hinzugetropft, und das Gemisch 150 min lang unter Rückfluss bei etwa 102 °C gerührt. Es folgt eine atmosphärische Destillation bis zu einer Temperatur von 155 °C. Nachfolgend wird unter Vakuum (d.h. 10 kPa oder weniger) bei einer Temperatur von maximal 170 °C destilliert, bis der Gehalt an freiem monomeren Phenol unter 1,0 % liegt. Durch Zugabe von Paraformaldehyd (maximal 5,0 g, 0,2 mol) wird die Schmelzviskosität auf einen Bereich zwischen 1300 - 1800 Pa s bei 130 °C eingestellt.
GPC: *M*ₙ = 1280 g/mol; *M*_{w} = 7460 g/mol; Ð = 5,83

### Novolak 6 (Bsp. 23)

Für die Herstellung von 1 kg Novolak werden Phenol (277,1 g, 2,95 mol), Cardanol (220,0 g, 0,74 mol), Wasser (118,2 g) und Oxalsäure (2,6 g) auf 90 - 92 °C geheizt. Paraformaldehyd (Gehalt an Formaldehyd 91 %, 90,0 g, 2,73 mol Formaldehyd) wird langsam und kontinuierlich bei 100 °C hinzudosiert, und das Gemisch wird 60 min lang unter Rückfluss bei ca. 100 °C gerührt. Es folgt eine atmosphärische Destillation bis zu einer Temperatur von 155 °C. Nachfolgend wird unter Vakuum (d.h. 10 kPa oder weniger) bei einer Temperatur von maximal 160 °C destilliert, bis der Gehalt an freiem monomeren Phenolunter 1,0 % liegt.
GPC: *M*ₙ = 790 g/mol; *M*_{w} = 1760 g/mol; Ð = 2, 07

### Novolak 7 (Bsp. 24)

Für die Herstellung von 1 kg Novolak werden Phenol (346,6 g, 3,69 mol), o-Kresol (101,6 g, 0,94 mol), Wasser (140,9 g) und Oxalsäure (3,3 g) auf eine Temperatur im Bereich von 90 °C bis 92 °C geheizt. Paraformaldehyd (Gehalt an Formaldehyd 91 %, 118,1 g, 3,58 mol Formaldehyd) wird langsam und kontinuierlich bei 100 °C hinzudosiert, und das Gemisch wird 60 min lang unter Rückfluss bei ca 100 °C gerührt. Es folgt eine atmosphärische Destillation bis zu einer Temperatur von 155 °C. Nachfolgend wird unter Vakuum (d.h. 10 kPa oder weniger) bei einer Temperatur von maximal 160 °C destilliert, bis der Gehalt an freiem monomeren unter 1,0 % liegt.
GPC: *M*ₙ = 650 g/mol; *M*_{w} = 1350 g/mol; Ð = 2,07

### b) Herstellung von Mischungen zur Herstellung von Prüfkörpern:

Mischungsbestandteile außer Bindemittelsystem und Trägerflüssigkeit Cyclohexanon:
- elektrochemisch aktives Material: Lithium-Nickel-Mangan-Cobalt-Oxid 622 (HEDTM NCM-622 ET011, BASF) bzw. Lithium-Eisen-Phosphat (IBUvolt^{®} LFP400, IBU-tec), nachstehend abgekürzt als NCM bzw. LFP
- elektrochemisch inaktives elektronisch leitfähiges Material: C-NERGY Super C65 Conductive Carbon Black (Powder Nano), nachstehend abgekürzt als CB

Für die Beispiele 1, 2, 10, 11, 12 und 21-24 wurde zunächst eine Feststoffmischung hergestellt. Dazu wurden Novolak, NCM und CB in einem Gebinde eingewogen, welches im Anschluss händisch geschüttelt wurde. Cyclohexanon und Polyethylenglykol-Diglycidylether (PEG-DGE, Zahlenmittel *Mₙ* der Molmasse: 500 g/mol) wurden in einem doppelwandigen Becher (Innendurchmesser 65 mm, Innenhöhe 85 mm) vorgelegt und die Feststoffmischung unter Rühren in einem Dissolver (LC55, Fa. Getzmann, Durchmesser Dissolverscheibe 40 mm) innerhalb von 1 min hinzudosiert. Anschließend wurde für 10 min bei 2000 Umdrehungen pro Min (U/min) gerührt. Nachfolgend wurde für 20 min bei 1700 U/min und dann für 10 min bei 1500 U/min weitergerührt. Während der Herstellung der Suspensionen wurde der Doppelwandbecher mit einem Umwälzkühler (Minichiller 600 OLE) auf eine Temperatur von 20 °C reguliert.

Für die Beispiele 4, 5, 6, 7, 8, 9, 13, 14 und 15 wurde zunächst eine Feststoffmischung hergestellt. Dazu wurden Novolak, NCM und CB, in einem Gebinde eingewogen, welches im Anschluss händisch geschüttelt wurde. Cyclohexanon wurde in einem LC55 Dissolver vorgelegt und die Feststoffmischung unter Rühren innerhalb von 1 min hinzudosiert. Anschließend wurde für 10 min bei etwa 2000 Umdrehungen pro Min (U/min) gerührt. Nachfolgend wurde für 20 min bei etwa 1400 U/min und dann für 10 min bei etwa 1300 U/min weitergerührt. Die verwendete Drehzahl wird jeweils so eingestellt, dass sich ein "Doughnut-Effekt" ergibt (Trombe, wobei ein Teil der Dissolverscheibe sichtbar wird). Während der Herstellung der Suspensionen wurde der Dissolver durch Anschluss eines Doppelwandbechers mit Umwälzkühler (Minichiller 600 OLE) auf eine Temperatur von 20 °C reguliert. 10 g der hergestellten Suspensionen wurden in ein Schnappdeckelglas umgefüllt und 0,060 g Polyethylenglykol-Diglycidylether (PEG-DGE, Zahlenmittel *Mₙ* der Molmasse: 500 g/mol) hinzudosiert. Die Suspension wurde mittels Rührfisch auf einer Magnetrührplatte für 1 min gerührt und anschließend direkt weiterverarbeitet.

In Beispiel 16 wurde als Vernetzungsmittel Polyethylenglykol-Diglycidylether (PEG-DGE Zahlenmittel *Mₙ* der Molmasse: 1000 g/mol) eingesetzt, ansonsten erfolgte die Herstellung der Suspension analog zur Herstellung der Suspension gemäß Beispiel 1.

In Beispiel 18 wurde als Vernetzungsmittel Hexamethyltetramin anstelle von Polyethylenglykol-Diglycidylether (PEG-DGE) eingesetzt, ansonsten erfolgte die Herstellung der Suspension analog zur Herstellung der Suspension gemäß Beispiel 1.

In Beispiel 19 wurde als Vernetzungsmittel das Epoxid EPON SU-8 anstelle von Polyethylenglykol-Diglycidylether (PEG-DGE) eingesetzt, ansonsten erfolgte die Herstellung der Suspension analog zur Herstellung der Suspension gemäß Beispiel 1.

In Beispiel 20 wurde als Vernetzungsmittel das Epoxid iPOX CL60 anstelle von Polyethylenglykol-Diglycidylether (PEG-DGE) eingesetzt, ansonsten erfolgte die Herstellung der Suspension analog zur Herstellung der Suspension gemäß Beispiel 1.

Für Vergleichsbeispiel 3 wurden PVDF, NCM und CB in einem Gebinde eingewogen, welches im Anschluss händisch geschüttelt wurde. NMP wurde in einem doppelwandigen Becher (Innendurchmesser 65 mm, Innenhöhe 85 mm) vorgelegt und die Feststoffmischung unter Rühren und Kühlung auf 20 °C innerhalb von 1 min hinzudosiert. Anschließend wurde für 10 min bei 2000 Umdrehungen pro Min (U/min) gerührt. Nachfolgend wurde für 20 min bei 1400 U/min und dann für 10 min bei 1300 U/min weitergerührt.

Für das Vergleichsbeispiel 17 wurde ein Vergleichs-Bindemittel in Form eines Produkts der Vernetzungsreaktion des Phenolharzes aus der Gruppe der Novolake mit dem Vernetzungsmittel Polyethylenglykol-Diglycidylether (PEG-DGE, Zahlenmittel *Mₙ* der Molmasse: 500 g/mol) hergestellt entsprechend der technischen Lehre aus US 2013/0323592 A1. Hierfür wurden Novolak 1 (15,96 g), PEG-DGE (3,99 g) und 1,2-Dimethylimidazol (0,25 g) in Cyclohexanon gelöst. Die Lösung wurde 4 h bei 120 °C gerührt. Im Anschluss wurde das Cyclohexanon teilweise mithilfe eines Rotationsverdampfers entfernt. Die Ausbeute betrug 25,86 g (59 Gew% Bindemittel und 41 Gew% Cyclohexanon). Aktivmaterial (NCM) und Additiv (CB) wurden in einem Gebinde eingewogen, welches im Anschluss händisch geschüttelt wurde, so dass eine Feststoffmischung resultiert. Das Bindemittel und weiteres Cyclohexanon wurden in einem doppelwandigen Becher (Innendurchmesser 65 mm, Innenhöhe 85 mm) vorgelegt und die Feststoffmischung umfassend CB und NCM unter Rühren in einem Dissolver (LC55, Fa. Getzmann, Durchmesser Dissolverscheibe 40 mm) innerhalb von 1 min hinzudosiert. Anschließend wurde für 10 min bei 2000 Umdrehungen pro Min (U/min) gerührt. Nachfolgend wurde für 20 min bei 1700 U/min und dann für 10 min bei 1500 U/min weitergerührt. Während der Herstellung der Suspensionen wurde der Doppelwandbecher mit einem Umwälzkühler (Minichiller 600 OLE) auf eine Temperatur von 20 °C reguliert.

Die Zusammensetzung der Suspensionen gemäß den Beispielen 1-24 kann den Tabellen 1 und 2 entnommen werden.

Für Beispiel 25 wurde eine Feststoffmischung hergestellt. Dabei wurde Novolak mit einer 63 µm-Labormühle zerkleinert. Anschließend wurden Novolak, Lithium-Eisenphosphat (LFP 400) und CB in einem Eirichmischer EL1 vorgelegt. Es wurde 10 min bei einer Umdrehungsgeschwindigkeit von 30 m/min gerührt. Im Anschluss wurde Polyethylenglykol-Diglycidylether (PEG-DGE) bei 3,5 m/min hinzugetropft und es wurde weitere 20 min bei 3,5 m/min gerührt.

Für Vergleichsbeispiel 26 wurde eine Feststoffmischung hergestellt. Dabei wurden PVDF, Lithium-Eisenphosphat (LFP 400) und CB in einem Eirichmischer EL1 vorgelegt 50 min bei einer Umdrehungsgeschwindigkeit von 30 m/min gerührt.

Die Zusammensetzung der der Feststoffmischungen 25 und 26, die für Trockenbeschichtungen (siehe unten) verwendet wurden, ist in Tabelle 5 angegeben.

**Tabelle 1: Zusammensetzung der Suspensionen (Angaben in [Gew %])**

| Suspension Bsp. Nr. | 1 | 2 | 4 | 5 | 6 | 18 | 19 | 20 | 21 | 22 | 23 | 24 | 3 (Vergleich) |
|---|---|---|---|---|---|---|---|---|---|---|---|---|---|
| Eingesetzter Novolak¹ | 1 | 1 | 1 | 1 | 1 | 1 | 1 | 1 | 4 | 5 | 6 | 7 | - |
| Novolak¹ | 2,38 | 2,38 | 2,38 | 2,38 | 1,85 | 2,56 | 2,64 | 2,70 | 1,92 | 1,92 | 1,80 | 1,85 | |
| PEGDGE² | 0,59 | 0,59 | 0,59 | 0,59 | 0,46 | | | | | | 0,45 | 0,46 | |
| Hexamethyltetramin³ | | | | | | 0,64 | | | 0,48 | 0,48 | | | |
| EPON SU-8⁴ | | | | | | | 0,56 | | | | | | |
| iPOX CL60⁵ | | | | | | | | 0,50 | | | | | |
| PVDF⁶ | | | | | | | | | | | | | 1,73 |
| NCM⁷ | 69,58 | 69,58 | 69,58 | 69,58 | 72,31 | 75,00 | 75,00 | 75,00 | 75,20 | 75,20 | 70,50 | 72,31 | 40,58 |
| CB⁸ | 1,67 | 1,67 | 1,67 | 1,67 | 2,31 | 1,80 | 1,80 | 1,80 | 2,40 | 2,40 | 2,25 | 2,31 | 0,97 |
| Cyclohexanon⁹ | 25,78 | 25,78 | 25,78 | 25,78 | 23,08 | 20,00 | 20,00 | 20,00 | 20,00 | 20,00 | 25,00 | 23,08 | |
| NMP¹⁰ | | | | | | | | | | | | | 56,72 |

| | | | | | | | | | | | | | |
|---|---|---|---|---|---|---|---|---|---|---|---|---|---|
| ¹: Darstellung wie oben unter a) beschrieben ²: Poly(ethylengycol)diglycidylether, Zahlenmittel *Mₙ* der Molmasse: 500 g/mol (Sigma Aldrich) ³: Hexamethyltetramin (Globe Chemicals GmbH) ⁴: EPON SU-8 (Polymer with (chloromethyl)oxirane and 4,4'-(1-methylethylidene)bis[phenol]) (Westflake Epoxy) ⁵: iPOX CL60 (Reaction product of ethoxylated trimethylol-propane with (chloromethyl)oxirane) (ipox chemicals Kft.) ⁶: Polyvinylidenfluorid (Sigma Aldrich, *M*_{W} (GPC) = 534 000 g/mol, Artikelnummer: 182702) ⁷: Lithium-Nickel-Mangan-Cobalt-Oxid 622 (HED^{™} NCM-622 ET011, BASF) ⁸: C-NERGY Super C65 Conductive Carbon Black (Powder Nano) ⁹: Cyclohexanon (Sigma Aldrich, 99 %) ¹⁰: N-Methyl-2-pyrrolidone (Sigma Aldrich, 99,9 %) | | | | | | | | | | | | | |

**Tabelle 2: Zusammensetzung der Suspension (Angaben in [Gew %])**

| Suspension Beispiel Nr. | 7 | 8 | 9 | 10 | 11 | 12 | 13 | 14 | 15 | 16 | 17 (Vergleich) | 3 (Vergleich) |
|---|---|---|---|---|---|---|---|---|---|---|---|---|
| Eingesetzter Novolak¹ | 1 | 1 | 1 | 1 | 2 | 3 | 1 | 1 | 1 | 1 | - | - |
| Novolak¹ | 2,38 | 4,14 | 3,57 | 2,38 | 1,66 | 1,71 | 1,48 | 1,98 | 2,88 | 2,05 | | |
| PEGDGE 500² | 0,59 | 1,68 | 0,94 | 0,59 | 0,41 | 0,43 | 1,48 | 0,99 | 0,32 | | | |
| PEGDGE 1000³ | | | | | | | | | | 1,03 | | |
| Bereits vernetzter Novolak⁴ | | | | | | | | | | | 3,20 | |
| PVDF⁵ | | | | | | | | | | | | 1,73 |
| NCM⁶ | 69,58 | 67,37 | 60,79 | 69,58 | 64,83 | 67,14 | | 75,20 | 75,20 | 72,11 | 75,20 | 40,58 |
| CB⁷ | 1,67 | 1,04 | 1,51 | 1,67 | 2,07 | 2,14 | 1,73 | 2,40 | 2,40 | 1,73 | 2,40 | 0,97 |
| Cyclohexanon⁸ | 25,78 | 25,77 | 33,02 | 23,08 | 31,03 | 28,57 | 25,78 | 20,00 | 20,00 | 23,08 | 20,00 | |
| NMP⁹ | | | | | | | | | | | | 56,72 |

| | | | | | | | | | | | | |
|---|---|---|---|---|---|---|---|---|---|---|---|---|
| ¹: Darstellung wie oben unter a) beschrieben ²: Poly(ethylengycol)diglycidylether, Zahlenmittel *Mₙ* der Molmasse: 500 g/mol (Sigma Aldrich) ³: Poly(ethylengycol)diglycidylether, Zahlenmittel *Mₙ* der Molmasse: 1000 g/mol (Sigma Aldrich) ⁴: Darstellung wie oben bei der Herstellung der Suspension gemäß Vergleichsbeispiel 17 beschrieben ⁵: Polyvinylidenfluorid (Sigma Aldrich, *M*_{W} (GPC) = 534 000 g/mol, Artikelnummer: 182702) ⁶: Lithium-Nickel-Mangan-Cobalt-Oxid 622 (HED^{™} NCM-622 ET011, BASF) ⁷: C-NERGY Super C65 Conductive Carbon Black (Powder Nano) ⁸: Cyclohexanon (Sigma Aldrich, 99 %) ⁹: *N*-Methyl-2-pyrrolidone (Sigma Aldrich, 99,9 %) | | | | | | | | | | | | |

### Messung der Viskosität der Suspensionen

Die Viskosität der Suspensionen wurde an einem Malvern Kinexus Lab+ Rheometer unter Verwendung einer Platte-Platte-Geometrie PU40 SR50003 SS bestimmt. Die Messung wurde bei 25 °C und bei aufsteigender Scherrate im Bereich im Bereich von 10 s⁻¹ bis 1000 s⁻¹ durchgeführt. Der Spaltabstand zwischen den beiden Platten betrug 0,2 mm.

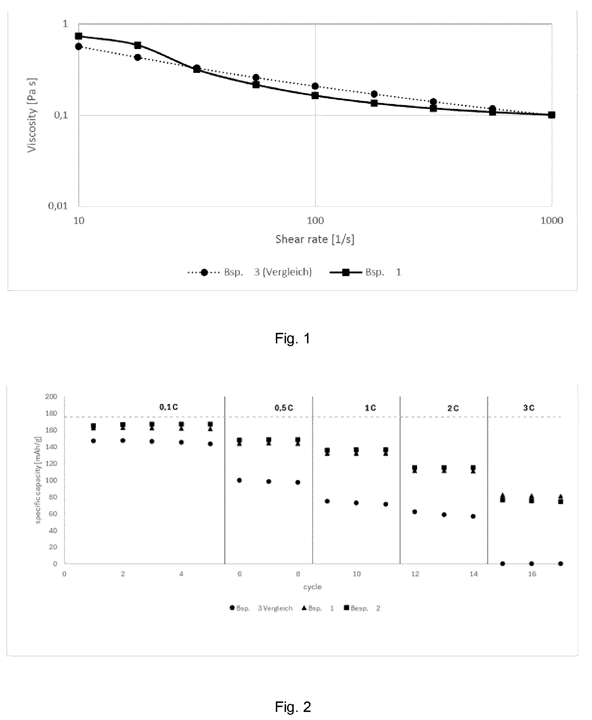

Es wurde überraschend gefunden, dass in den Suspensionen mit einem Novolak enthaltenden Bindemittelsystem eine deutlich geringere Menge der Trägerflüssigkeit Cyclohexanon (20 Gew% bis 33 Gew% bezogen auf die Gesamtmasse der Suspension) notwendig ist, um eine ähnliche Viskosität zu erreichen wie bei der Suspension gemäß Vergleichsbeispiel 3 mit der Trägerflüssigkeit NMP (> 50 Gew% bezogen auf die Gesamtmasse der Suspension). (Figur 1). Die Verwendung von PVDF mit Cyclohexanon als Trägerflüssigkeit ist aufgrund der unzureichenden Löslichkeit von PVDF in Cyclohexanon nicht möglich.

### c) Herstellung von Prüfkörpern

Es wurden Prüfkörper hergestellt, die den Schichtaufbau einer Elektrode nachbilden. Es versteht sich von selbst, dass die Prüfkörper nicht für den tatsächlichen Einsatz als Elektrode in einer Batterie optimiert sind. Die Untersuchungen dieser Prüfkörper ermöglichen es jedoch, unterschiedliche Bindemittelsysteme untereinander zu vergleichen.

### Beschichtung mittels Filmziehen

Für die Herstellung von Prüfkörpern wurde eine Aluminiumfolie, wie in Elektroden als Stromabnehmer verwendet, durch Auftragen einer wie oben beschrieben hergestellten Suspension durch Filmziehen mittels einer Rakel beschichtet, um eine Aktivschicht zu bilden.

Die Aluminium-Folie (Hersteller: Targray) wurde auf einen ZAA 2300 Zehntner-Automatic Film Applicator aufgebracht und mit Isopropanol gereinigt. Im Anschluss wurde eine Zehntner ZUA 2000 Rakel auf die Aluminiumfolie aufgebracht und auf eine bestimmte Höhe eingestellt. Die hergestellten Suspensionen (vgl. Tabellen 1 und 2) wurden mithilfe einer Spritze in einer Menge von 5 ml bis 10 ml vor der Rakel auf die Aluminiumfolie aufgetragen und mithilfe der Rakel bei einer Fahrgeschwindigkeit von 10 mm/s verteilt, so dass ein Film entsteht. Der so hergestellte Prüfkörper wurde auf eine Heiz- und Vakuumplatte eines Filmziehgerätes ZAA2600 transferiert und unter anliegendem Vakuum bei 80 °C für 20 min getrocknet, so dass die Trägerflüssigkeit durch Verdampfen entfernt wird.

Für ausgewählte Beispiele erfolgte ein thermischer Nachprozess im Ofen, um Novolak und Vernetzungsmittel thermisch induziert zur Vernetzungsreaktion zu bringen, so dass eine Aktivschicht resultiert, welche das Produkt der Vernetzungsreaktion zwischen Novolak und dem Vernetzungsmittel des Bindemittelsystems enthält.

Die Anteile der Suspensionsbestandteile bezogen auf die Gesamtmasse der Suspension abzüglich der Masse der Trägerflüssigkeit sowie die Prozessparameter für die Herstellung der Prüfkörper können den Tabellen 3 und 4 entnommen werden. Die Beispielnummern der Prüfkörper in den Tabellen 3 und 4 entsprechen den Beispielnummern der zu ihrer Herstellung eingesetzten Suspensionen.

Die Gew.%-Anteile der Mischungsbestandteile entsprechen näherungsweise den Anteilen der entsprechenden Bestandteile in der Aktivschicht, wobei der Anteil des Vernetzungsprodukts aus Novolak und Vernetzungsmittel näherungsweise der Summe der Anteile von Novolak und Vernetzungsmittel bezogen auf die Gesamtmasse der Suspension abzüglich der Masse der Trägerflüssigkeit entspricht.

**Tab. 3: Suspensionsbestandteile (in [Gew%] bezogen auf Gesamtmasse der Suspension abzüglich der Trägerflüssigkeit) und Parameter für Prüfkörper-Herstellung**

| Prüfkörper Beispiel Nr. | 1 | 2 | 4 | 5 | 6 | 18 | 19 | 20 | 21 | 22 | 23 | 24 | 3 (Vergleich) |
|---|---|---|---|---|---|---|---|---|---|---|---|---|---|
| Eingesetzter Novolak¹ | 1 | 1 | 1 | 1 | 1 | 1 | 1 | 1 | 4 | 5 | 6 | 7 | - |
| Novolak¹ | 3,20 | 3,20 | 3,20 | 3,20 | 2,40 | 3,20 | 3,30 | 3,37 | 2,40 | 2,40 | 2,40 | 2,40 | |
| PEGDGE 500² | 0,80 | 0,80 | 0,80 | 0,80 | 0,60 | | | | 0,60 | 0,60 | 0,60 | 0,60 | |
| Hexamethyltetramin³ | | | | | | 0,80 | | | | | | | |
| EPON SU-8⁴ | | | | | | | 0,70 | | | | | | |
| iPOX CL60⁵ | | | | | | | | 0,63 | | | | | |
| PVDF⁶ | | | | | | | | | | | | | 4,00 |
| NCM⁷ | 93,75 | 93,75 | 93,75 | 93,75 | 94,00 | 93,75 | 93,75 | 93,75 | 94,00 | 94,00 | 94,00 | 94,00 | 93,75 |
| CB⁸ | 2,25 | 2,25 | 2,25 | 2,25 | 3,00 | 2,25 | 2,25 | 2,25 | 3,00 | 3,00 | 3,00 | 3,00 | 2,25 |
| Rakelhöhe [µm] | 105 | 105 | 140 | 100 | 135 | 110 | 85 | 120 | 135 | 90 | 110 | 100 | 220 |
| Nachprozesstemperatur [°C] | 150 | 150 | 140 | 140 | 140 | 150 | 150 | 150 | 140 | 140 | 140 | 140 | - |
| Nachprozesszeit [min] | 5 | 60 | 60 | 60 | 60 | 60 | 60 | 60 | 60 | 60 | 60 | 60 | - |

| | | | | | | | | | | | | | |
|---|---|---|---|---|---|---|---|---|---|---|---|---|---|
| ¹: Darstellung wie oben unter a) beschrieben ²: Poly(ethylengycol)diglycidylether, Zahlenmittel *Mₙ* der Molmasse: 500 g/mol (Sigma Aldrich) ³: Hexamethyltetramin (Globe Chemicals GmbH) ⁴: EPON SU-8 (Polymer with (chloromethyl)oxirane and 4,4'-(1-methylethylidene)bis[phenol]) (Westflake Epoxy) ⁵: iPOX CL60 (Reaction product of ethoxylated trimethylol-propane with (chloromethyl)oxirane) (ipox chemicals Kft.) ⁶: Polyvinylidenfluorid (Sigma Aldrich, *M*_{W} (GPC) = 534 000 g/mol, Artikelnummer: 182702) ⁷: Lithium-Nickel-Mangan-Cobalt-Oxid 622 (BASF) ⁸: C-NERGY Super C65 Conductive Carbon Black (Powder Nano) | | | | | | | | | | | | | |

**Tab. 4: Suspensionsbestandteile (in [Gew%] bezogen auf Gesamtmasse der Suspension abzüglich der Trägerflüssigkeit) und Parameter für Prüfkörper-Herstellung**

| Prüfkörper Beispiel Nr. | 7 | 8 | 9 | 10 | 11 | 12 | 13 | 14 | 15 | 16 | 17 (Vergleich) | 3 (Vergleich) |
|---|---|---|---|---|---|---|---|---|---|---|---|---|
| Eingesetzter Novolak¹ | 1 | 1 | 1 | 1 | 2 | 3 | 1 | 1 | 1 | 1 | - | - |
| Novolak¹ | 3,20 | 5,25 | 5,25 | 2,40 | 2,40 | 2,40 | 2,00 | 2,67 | 3,60 | 2,67 | | |
| PEGDGE 500² | 0,80 | 1,75 | 1,75 | 0,60 | 0,60 | 0,60 | 2,00 | 1,33 | 0,40 | | | |
| PEGDGE 1000³ | | | | | | | | | | 1,33 | | |
| Bereits vernetzter Novolak⁴ | | | | | | | | | | | 4,00 | |
| PVDF⁵ | | | | | | | | | | | | 4,00 |
| NCM⁶ | 93,75 | 90,75 | 90,75 | 94,75 | 94,00 | 94,00 | 93,75 | 93,75 | 93,75 | 93,75 | 93,75 | 93,75 |
| CB⁷ | 2,25 | 2,25 | 2,25 | 2,25 | 3,00 | 3,00 | 2,25 | 2,25 | 2,25 | 2,25 | 2,25 | 2,25 |
| Rakelhöhe [µm] | 180 | 180 | 180 | 135 | 135 | 140 | 180 | 180 | 180 | 100 | 115 | 220 |
| Nachprozesstemperatur [°C] | 140 | 140 | - | 140 | 140 | 140 | 140 | 140 | 140 | 140 | - | - |
| Nachprozesszeit [min] | 60 | 60 | - | 60 | 60 | 60 | 60 | 60 | 60 | 60 | - | - |

| | | | | | | | | | | | | |
|---|---|---|---|---|---|---|---|---|---|---|---|---|
| ¹: Darstellung wie oben unter a) beschrieben ²: Poly(ethylengycol)diglycidylether, Zahlenmittel *Mₙ* der Molmasse: 500 g/mol (Sigma Aldrich) ³: Poly(ethylengycol)diglycidylether, Zahlenmittel *Mₙ* der Molmasse: 1000 g/mol (Sigma Aldrich) ³⁴: Darstellung wie oben bei der Herstellung der Suspension gemäß Vergleichsbeispiel 17 beschrieben ⁵: Polyvinylidenfluorid (Sigma Aldrich, *M*_{W} (GPC) = 534 000 g/mol, Artikelnummer: 182702) ⁶: Lithium-Nickel-Mangan-Cobalt-Oxid 622 (BASF) ⁷: C-NERGY Super C65 Conductive Carbon Black (Powder Nano) | | | | | | | | | | | | |

### Trockenbeschichtung

Für die Herstellung weiterer Prüfkörper wurde eine Aluminiumfolie, wie in Elektroden als Stromabnehmer verwendet, mit einer Feststoffmischung der in Tabelle 5 angegebenen Zusammensetzung beschichtet, um eine Aktivschicht zu bilden. Die Gew.%-Anteile der Bestandteile der Feststoffmischung entsprechen näherungsweise den Anteilen der entsprechenden Bestandteile in der Aktivschicht, wobei der Anteil des Vernetzungsprodukts aus Novolak und Vernetzungsmittel näherungsweise der Summe der Anteile von Novolak und Vernetzungsmittel bezogen auf die Gesamtmasse der Feststoffmischung entspricht.

Eine Aluminium-Folie (Hersteller: Targray) wurde mit Isopropanol gereinigt. Im Anschluss erfolgte das Auftragen einer Masse von 0,52 - 0,58 g Trockenmischung mithilfe eines Streuers (0,5 mm x 0,3 mm Maschengröße) auf eine Fläche von 40 cm². Eine Heißpresse Polystat 200 T wurde auf 200 °C geheizt. Der Probekörper wurde zwischen zwei Metallplatten platziert, wobei unterhalb des Probekörpers ein Thermo-H40 Presspolster (MSC Polymer) und darüber ein Teflonpapier (Dicke: 0.5 mm) platziert wurden. Oberhalb der Aluminiumfolie wurde eine Polyimide Trennfolie (HPI-100 Trennfolie, MSC Polymer) aufgelegt. Der Probekörper wurde anschießend in die Heißpresse gegeben, und es wurde 10 min bei einer Kraft von 5000 N/cm² bei 200 °C gepresst, um die Komponenten Novolak und PEGDGE thermisch induziert zur Vernetzungsreaktion zu bringen. Im Anschluss wurde der Probekörper in der Heißpresse abgekühlt.

**Tab. 5: Zusammensetzung der Feststoffmischungen für Trockenbeschichtung (in [Gew%])**

| Beispiel Nr. | 25 | 26 (Vergleich) |
|---|---|---|
| Novolak 1¹ | 4,00 | |
| PEGDGE 500² | 1,00 | |
| PVDF³ | | 5,00 |
| LFP 400⁴ | 90,00 | 90,00 |
| CB⁵ | 5,00 | 5,00 |

| | | |
|---|---|---|
| ¹: Darstellung wie oben unter a) beschrieben ²: Poly(ethylengycol)diglycidylether, Zahlenmittel *Mₙ* der Molmasse: 500 g/mol (Sigma Aldrich) ³: Polyvinylidenfluorid (Sigma Aldrich, *M*_{W} (GPC) = 534 000 g/mol, Artikelnummer: 182702) ⁴: Lithium-Eisen-Phosphat (LFP) (IBUvolt^{®} LFP400, IBU-tec) ⁵: C-NERGY Super C65 Conductive Carbon Black (Powder Nano) | | |

### Messung der Adhäsion der Beschichtungen der Prüfkörper

Die Messungen wurden durchgeführt mit einer Materialprüfmaschine 20 kN RetroLine (Fa. Zwick Roell) ausgerüstet mit einem Xforce HP Kraftaufnehmer mit einer Nennkraft von 2,5 kN sowie mit einer Prüfvorrichtung für Z-Zugversuch zur Prüfung von Papier und Batteriefolien.

Der obere und der untere Probenhalter der Prüfvorrichtung für den Z-Zugversuch mit dem doppelseitigen Klebeband Tesa extra strong (Fa. Tesa) beklebt. Der untere Probehalter wird anschließend auf die Beschichtung des Prüfkörpers gedrückt und der Prüfkörper wird um den Probehalter herum mit Hilfe eines Skalpells ausgeschnitten. Anschließend werden mit Hilfe des Skalpells die fünf Messpositionen unterteilt. Bei der Messung fahren die Probenhalter mit einer Geschwindigkeit von 5 mm/min aufeinander, bis eine Vorkraft von 10 N erreicht wird. Der anschließende Druckaufbau geschieht mit einer Geschwindigkeit von 10 mm/min. Hierbei ist zu beachten, dass der Druckaufbau nicht unmittelbar erfolgt, da zuerst der Setzeffekt der Aufhängung einsetzt (die Aufhängung wird für eine planparallele Ausrichtung benötigt). Die Druckbelastung von 600 kPa wird für 30 Sekunden gehalten. Anschließend startet die Zugbelastung mit einer Prüfgeschwindigkeit von 100 mm/min. Auch hier gilt es zu berücksichtigen, dass zunächst die Setzeffekte der Aufhängung überwunden werden müssen. Die Adhäsion ergibt sich als Mittelwert aus 5 Messwerten.

Die ermittelten Adhäsionen können den Tabellen 7 und 8 entnommen werden. Für die meisten Prüfkörper mit einem Bindemittelsystem, dessen Novolak bei der Prüfkörperherstellung in-situ vernetzt wurde, einschließlich des mittels Trockenbeschichtung hergestellten Prüfkörpers 25, wurde eine Adhäsion im Bereich von >400 kPa ermittelt, während die Vergleichsbeispiele eine Adhäsion von < 250 kPa aufweisen.

Vergleichsbeispiel 17 zeigt, dass mit einem Bindemittel, in welchem die Vernetzungsreaktion zwischen dem Novolak 1 und dem Vernetzungsmittel Polyethylenglykol-Diglycidylether PEG-DGE 500 bereits vor der Elektrodenherstellung erfolgt ist (wie im Stand der Technik gemäß US 2013/0323592 A1), keine so starke Adhäsion erreicht wird wie mit dem erfindungsgemäßen Bindemittelsystem und dem erfindungsgemäßen Verfahren, in welchem die Vernetzungsreaktion des Phenolharzes aus der Gruppe der Novolake in-situ bei der Elektrodenherstellung erfolgt.

Beispiel 9 zeigt, dass es für eine ausreichende Adhäsion entscheidend auf die Temperatur und Dauer des Erwärmens in Schritt (ii) ankommt. In Beispiel 9 reichte wegen des fehlenden thermischen Nachprozesses die Erwärmung für das gewählte Bindemittelsystem nicht aus, um eine ausreichende Adhäsion zu erreichen. Daher sind in bestimmten Fällen höhere Temperaturen (120°C bis 150 °C) und/oder längeres Erwärmen bevorzugt.

In den Beispielen 11 und 12 liegen das Zahlenmittel und das Massenmittel des Molmasse des Novolaks unterhalb des oben definierten bevorzugten Bereichs, und es wird eine Adhäsion < 400 kPa erreicht. Daher sind Novolake mit einem so niedrigen Zahlen- und/oder Massenmittel der Molmasse nicht bevorzugt.

In den Beispielen 13, 14 und 15 beträgt das Massenverhältnis des Phenolharzes aus der Gruppe der Novolake zu Epoxid mit zwei oder mehr Epoxidgruppen pro Molekül 1:1, 2:1 bzw. 9:1 und liegt somit außerhalb des oben definierten bevorzugten Bereichs, und es wird eine Adhäsion < 400 kPa erreicht. Daher sind derartige Bindemittelsysteme nicht bevorzugt.

### d) Elektrochemische Charakterisierung

Die zur elektrochemischen Charakterisierung vorgesehenen Prüfkörper (außer Beispiel 10) wurden mithilfe eines Kalanders bei einem Spalt von 25 µm und einer Walzengeschwindigkeit von 1 bis 2 m/min verdichtet.

### Bau von Knopfzellen

Zur Untersuchung der elektrochemischen Eigenschaften ausgewählter Prüfkörper wurden Knopfzellen hergestellt mit einem Knopfzellengehäuse des Typs Coin Cell 2032 mit einem Durchmesser von 20 mm aus Stahl 304. Der Bau der Knopfzelle erfolgte unter Argon-Atmosphäre. Der Separator (Grade GF/D, Whatman, Schichtdicke: 670 µm, Porengröße: 2,7 µm, Durchmesser: 16 mm) wurde vor dem Bau für 12 h bei 160°C ausgeheizt. Ein kreisförmiger Prüfkörper mit einem Durchmesser von 15 mm wurde ausgestanzt und als Kathode unter Argon-Atmosphäre auf die untere Abdeckung, welche 12 h bei 60 °C getrocknet wurde, aufgebracht. Der Elektrolyt *LP57 + 2 VC* (E-lyte Innovations GmbH, DE), bestehend aus 1 M LiPF₆ in Ethylcarbonat (EC): Ethylmethylcarbonat (EMC) im Verhältnis 3:7 mit 2 % Vinylcarbonat (VC), wurde auf den Separator aufgegeben und der mit dem Elektrolyten getränkte Separator wurde auf den Prüfkörper aufgebracht. Als nächste Schicht folgte die Anode (Lithium, Durchmesser: 15 mm). Den oberen Teil der Knopfzelle bildeten ein Spacer (Material: Stahl 304, Dicke: 1,0 mm), eine Feder (Spring, Material: Stahl 304) und die obere Abdeckung, welche zuvor 12 h bei 60 °C gelagert wurden.

Die Untersuchungen wurden bei variierenden Lade- und Entladeraten (Zyklierversuche) gemäß Tabelle 6 durchgeführt. Zur Berechnung der C-Rate wurde nur der Anteil an Aktivmaterial berücksichtigt und eine theoretische spezifische Kapazität von 175,8 mAh/g angenommen. Das Potentialfenster wurde von 2,5 bis 4,2 V gewählt.

**Tabelle 6: Lade- und Entladeraten der elektrochemischen Untersuchungen**

| Zyklus | Laderate | Entladerate |
|---|---|---|
| 1-5 | 0,1 C | 0,1 C |
| 6-8 | 0,5 C | 0,5 C |
| 9-11 | 1 C | 0,5 C |
| 12-14 | 2 C | 0,5 C |
| 15-17 | 3 C | 0,5 C |

Die Kenn- und Messwerte der hergestellten Elektroden sind in den Tabellen 7 und 8 aufgeführt. Die originalen Messdaten der Zyklierversuche einiger Prüfkörper sind in Figur 2 gezeigt. Aus Figur 2 geht hervor, dass die Prüfkörper der Beispiele, 1 und 2 trotz einer höheren Flächenbeladung bei einer Laderate von 2C höhere spezifische Kapazitäten aufweisen als das Vergleichsbeispiel 3. Wie aus Figur 2 ersichtlich, zeigen die erfindungsgemäßen Beispiele 1 und 2 sogar bei Laderaten von 3C noch eine signifikante Kapazität von 80 mAh/g, während die Kapazität des Vergleichsbeispiels 3 praktisch auf Null gesunken ist.

In den erfindungsgemäßen Beispielen 1, 2, 4 und 5 wurde eine höhere Adhäsion der Aktivschicht und eine höhere C-Raten-Stabilität beobachtet als in Vergleichsbeispiel 3, obwohl sich die Zusammensetzung der Aktivschicht (93,75 % NCM, 2,25 % CB, 4 % Bindemittel, vgl. Tabelle 3) nur hinsichtlich der Art des Bindemittels (Vernetzungsprodukt aus Novolak und PEG-DEG 500 in den Beispielen 1, 2, 4 und 5, PVDF in Vergleichsbeispiel 3) unterschied.

Auch die Beispiele 6, 21 und 22 zeigten sowohl eine höhere Adhäsion als auch eine höhere C-Raten-Stabilität als das Vergleichsbeispiel 3, obwohl der Anteil an Bindemittel (ca. 3 Gew.% Vernetzungsprodukt aus Novolak und PEG-DEG 500, vgl. Tabelle 3) geringer ist als der Anteil des Bindemittels PVDF in Vergleichsbeispiel 3.

Die weiteren Beispiele in Tabelle 8 weisen eine Adhäsion < 300 kPa auf (zu den Ursachen dafür siehe oben unter c)) und/oder erreichen bei der Laderate 2 C nicht das Niveau von Vergleichsbeispiel 3.

In den Beispielen 7 und 8 haben die Aktivschichten eine oberhalb des oben definierten bevorzugten Bereichs liegende flächenbezogene Masse > 30 mg/cm². Eine so hohe flächenbezogene Masse führt zu einer Verminderung der spezifischen Kapazität bei hohen C-Raten. Daher sind Elektroden, deren Aktivschicht eine so hohe flächenbezogene Masse hat, nicht bevorzugt.

In Beispiel 8 liegt der Anteil des Produkts der Vernetzungsreaktion zwischen dem Phenolharz aus der Gruppe der Novolake und dem Vernetzungsmittel des Bindemittelsystems (hier: PEG-DGE Mn: 500 g/mol) in der Aktivschicht mit 7 Gew% oberhalb des oben definierten bevorzugten Bereichs. Dies führt zu einer Verminderung der spezifischen Kapazität bei hohen C-Raten. Daher sind Elektroden, deren Aktivschichten einen so hohen Anteil an Vernetzungsprodukt des Bindemittelsystems aufweist, nicht bevorzugt.

In Beispiel 10 liegt die Dichte der Aktivschicht mit 1,96 g/cm³ unterhalb des oben definierten bevorzugten Bereichs für Lithium-Nickel-Cobalt-Mangan-Mischoxide (sogenannte "NCM") als elektrochemisch aktives Material. Dies führt zu einer Verminderung der spezifischen Kapazität bei hohen C-Raten. Daher sind Elektroden mit Lithium-Nickel-Cobalt-Mangan-Mischoxiden (sogenannte "NCM") als elektrochemisch aktives Material, deren Aktivschichten eine so geringe Dichte aufweist, nicht bevorzugt, und es ist bevorzugt, die Dichte der Aktivschicht durch Kalandrieren zu erhöhen, so dass sie in den bevorzugten Bereich fällt.

Beispiel 16 zeigt, dass auch die Wahl des Vernetzungsmittels einen Einfluss haben kann auf die die spezifische Kapazität bei hohen Laderaten. In Beispiel 16 wurde als Vernetzungsmittel Polyethylenglykol-Diglycidylether (PEG-DGE Zahlenmittel *Mₙ* der Molmasse: 1000 g/mol) eingesetzt, dieses ist daher nicht bevorzugt.

**Tabelle 7: Kenn- und Messwerte der Prüfkörper - bevorzugte Beispiele**

| Prüfkörper Beispiel Nr. | 1 | 2 | 4 | 5 | 6 | 21 | 22 | 3 (Vergleich) |
|---|---|---|---|---|---|---|---|---|
| Eingesetzter Novolak¹ | 1 | 1 | 1 | 1 | 1 | 4 | 5 | PVDF als Bindemittel |
| Flächenbeladung [mg/cm²] | 14,5 | 14,8 | 17,1 | 10,7 | 18,0 | 13,9 | 14,4 | 11,7 |
| Dichte [g/cm³] | 2,90 | 2,80 | 2,80 | 2,46 | 2,40 | n.m | 2,90 | 2,60 |
| Adhäsion [kPa] | 1131 | 1143 | 860 | 926 | 1099 | 431 | 979 | 92 |
| Kapazität bei 0,1C [%]* | 99,9 | 100 | 98,8 | 99,6 | 99,4 | 99,0 | 100 | 97,9 |
| Kapazität bei 0,5C [%]* | 88,7 | 89,1 | 86,2 | 88,5 | 89,7 | 88,5 | 90,0 | 62,8 |
| Kapazität bei 1C [%]* | 79,5 | 81,9 | 76,1 | 81,4 | 77,5 | 76,8 | 83,5 | 41,6 |
| Kapazität bei 2C [%]* | 67,5 | 69,3 | 52,2 | 68,6 | 63,9 | 48,1 | 66,9 | 33,5 |
| Kapazität bei 3C [%]* | 44,9 | 45,4 | 0,0 | 50,3 | 20,1 | 5,9 | 24,4 | 0,0 |

| | | | | | | | | |
|---|---|---|---|---|---|---|---|---|
| *: Im Vergleich zur Ausgangskapazität (Zyklus 2). Es wurde jeweils ein Mittelwert aus 3 Zyklen gebildet (bei 0,1C wurden die Zyklen 3-5 betrachtet) n.m.: nicht gemessen | | | | | | | | |

**Tabelle 8: Kenn- und Messwerte der Prüfkörper- weitere Beispiele**

| PrTüfkörper Beispiel Nr. | 5 | 7 | 8 | 9 | 10^{a} | 11 | 12 | 13 | 14 | 15 | 16 | 17 (Vergleich) | 18 | 19 | 20 | 21 | 22 | 23 | 24 | 25 | 26 (Vergleich |
|---|---|---|---|---|---|---|---|---|---|---|---|---|---|---|---|---|---|---|---|---|---|
| Eingesetzter Novolak¹ | | 1 | 1 | 1 | 1 | 2 | 3 | 1 | 1 | 1 | 1 | Vorvernetzter Novolak 1 | 1 | 1 | 1 | 4 | 5 | 6 | 7 | 1 | PVDF als Bindemittel |
| Flächenbeladung [mg/cm²] | | 32,3 | 31,1 | 14,2 | 23,6 | 19,1 | 13,6 | 28,1 | 23,9 | 25,7 | 13,2 | 14,6 | 16,0 | 19,9 | 16,5 | 13,9 | 14,37 | 17,7 | 18,2 | 9,7 | 11,6 |
| Dichte [g/cm³] | | 3,00 | 2,41 | 1,16 | 1,96 | 1,87 | 1,74 | 2,26 | 2,07 | 1,73 | 2,65 | 2,05 | 1,93 | 2,14 | 2,32 | 1,34 | 2,9 | 2,29 | 2,35 | 1,13 | 1,4 |
| Adhäsion [kPa] | 926 | 656 | 958 | 15 | 789 | 222 | 30 | 243 | 262 | 232 | 892 | 177 | 603 | 1086 | 973 | 431 | 979 | 697 | 548 | 601 | 206 |
| Kapazität bei 0,1C [%]* | n.m. | 98,1 | 95,4 | n.m. | 100 | n.m. | n.m. | n.m. | n.m. | n.m. | 94,7 | n.m. | n.m. | n.m. | n.m. | n.m. | n.m. | n.m. | n.m. | n.m. | n.m. |
| Kapazität bei 0,5C [%]* | n.m. | 78,0 | 21,9 | n.m. | 87,7 | n.m. | n.m. | n.m. | n.m. | n.m. | 73,4 | n.m. | n.m. | n.m. | n.m. | n.m. | n.m. | n.m. | n.m. | n.m. | n.m. |
| Kapazität bei 1C [%]* | n.m. | 50,6 | 0,0 | n.m. | 47,3 | n.m. | n.m. | n.m. | n.m. | n.m. | 55,8 | n.m. | n.m. | n.m. | n.m. | n.m. | n.m. | n.m. | n.m. | n.m. | n.m. |
| Kapazität bei 2C [%]* | n.m. | 0,1 | 0,0 | n.m. | 0,0 | n.m. | n.m. | n.m. | n.m. | n.m. | 23,6 | n.m. | n.m. | n.m. | n.m. | n.m. | n.m. | n.m. | n.m. | n.m. | n.m. |
| Kapazität bei 3C [%]* | n.m. | 0,0 | 0,0 | n.m. | 0,0 | n.m. | n.m. | n.m. | n.m. | n.m. | 0,0 | n.m. | n.m. | n.m. | n.m. | n.m. | n.m. | n.m. | n.m. | n.m. | n.m. |

| | | | | | | | | | | | | | | | | | | | | | |
|---|---|---|---|---|---|---|---|---|---|---|---|---|---|---|---|---|---|---|---|---|---|
| *: Im Vergleich zur Ausgangskapazität (Zyklus 2). Es wurde jeweils ein Mittelwert aus 3 Zyklen gebildet (bei 0,1C wurden die Zyklen 3-5 betrachtet). a): Prüfkörper wurde nicht kalandriert n.m.: nicht gemessen | | | | | | | | | | | | | | | | | | | | | |

## Patentansprüche

1. Bindemittelsystem für die Herstellung einer Elektrode für eine elektrochemische Zelle, wobei das Bindemittelsystem umfasst:
(a) ein Phenolharz aus der Gruppe der Novolake,
und
(b) zum Vernetzen des Phenolharzes aus der Gruppe der Novolake ein Vernetzungsmittel.

2. Bindemittelsystem gemäß Anspruch 1, wobei das Phenolharz aus der Gruppe der Novolake
- phenolische Struktureinheiten (a1) 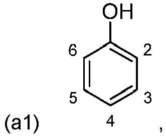 wobei an einer, zwei oder drei der Positionen 2, 4 und 6 eine Bindung an eine weitere strukturelle Einheit des Phenolharzes vorliegt,
- optional phenolische Struktureinheiten (a2) 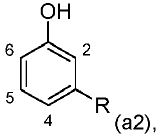 wobei der Substituent R ein gesättigter oder ungesättigter Kohlenwasserstoff-Rest mit insgesamt 1 bis 35 Kohlenstoff-Atomen ist und wobei an einer, zwei oder drei der Positionen 2, 4 und 6 eine Bindung an eine weitere strukturelle Einheit des Phenolharzes vorliegt,
- optional phenolische Struktureinheiten (a3) 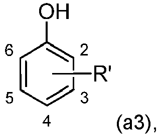 wobei sich der Substituent R' an der Position 2 oder 4 befindet und ein gesättigter oder ungesättigter Kohlenwasserstoff-Rest mit insgesamt 1 bis 15 Kohlenstoff-Atomen ist und wobei an einer oder zwei der Positionen 2, 4 und 6 eine Bindung an eine weitere strukturelle Einheit des Phenolharzes vorliegt,
- sowie Struktureinheiten (a4) 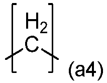 welche jeweils zwei phenolische Struktureinheiten in ortho-ortho-, ortho-para- oder para-para-Kopplung verbinden,
umfasst.

3. Bindemittelsystem gemäß einem der vorhergehenden Ansprüche, wobei das Phenolharz aus der Gruppe der Novolake
- ein Zahlenmittel *Mₙ* der Molmasse im Bereich von 500 g/mol bis 1400 g/mol, und/oder
- ein Massenmittel *M*_{w} der Molmasse im Bereich von 600 g/mol bis 8500 g/mol, und/oder
- eine Polydispersität *Ð* = *M*_{w}/*Mₙ* im Bereich von 1,9 bis 6,5 aufweist.

4. Bindemittelsystem gemäß einem der vorhergehenden Ansprüche, wobei das Phenolharz aus der Gruppe der Novolake herstellbar ist durch Reaktion von Formaldehyd und Phenolmonomeren bei einer Temperatur von mindestens 80°C, wobei das molare Verhältnis von Formaldehyd zu Phenolmonomeren im Bereich von 0,27 bis 1,00 liegt,
und anschließende Destillation bei einem Druck von 10 kPa oder weniger,
wobei die Reaktion von Formaldehyd und Phenolmonomeren in Gegenwart eines Katalysators ausgewählt aus der Gruppe der Säuren erfolgt,
oder
wobei die Reaktion von Formaldehyd und Phenolmonomeren eine erste Stufe in Gegenwart eines Katalysators ausgewählt aus der Gruppe der Salze zweiwertiger Metallionen und eine anschließende zweite Stufe in Gegenwart eines Katalysators ausgewählt aus der Gruppe der Säuren umfasst.

5. Bindemittelsystem gemäß einem der vorhergehenden Ansprüche, wobei das Vernetzungsmittel ausgewählt ist aus der Gruppe bestehend aus Hexamethylentetramin, Epoxiden mit zwei oder mehr Epoxidgruppen pro Molekül, Isocyanaten mit zwei oder mehr Isocyanatgruppen pro Molekül, und Carbonsäuren und deren Estern und Anhydriden.

6. Bindemittelsystem gemäß einem der vorhergehenden Ansprüche, wobei
- ein erster Behälter eine erste Komponente enthält, die das Phenolharz aus der Gruppe der Novolake umfasst, und
- ein separater zweiter Behälter eine zweite Komponente enthält, die das Vernetzungsmittel umfasst
wobei das Phenolharz aus der Gruppe der Novolake und das Vernetzungsmittel räumlich voneinander getrennt sind.

7. Bindemittelsystem gemäß Anspruch 6, wobei
- die erste Komponente das Phenolharz aus der Gruppe der Novolake in einem Lösungsmittel umfasst,
wobei bevorzugt die Konzentration des Phenolharzes aus der Gruppe der Novolake im Bereich von 3 Gew% bis 40 Gew% liegt, bezogen auf die Gesamtmasse der ersten Komponente
und
- die zweite Komponente das Vernetzungsmittel umfasst, optional in einem Lösungsmittel,
wobei die Konzentration des Vernetzungsmittels bevorzugt im Bereich von 5 Gew% bis 100 Gew% liegt, bezogen auf die Gesamtmasse der zweiten Komponente.

8. Bindemittelsystem nach Anspruch 7, wobei das Lösungsmittel der ersten und/oder der zweiten Komponente einen Flammpunkt von 25 °C oder mehr und einen Siedepunkt im Bereich von 25 °C bis 200 °C hat,
wobei das Lösungsmittel der ersten und/oder der zweiten Komponente bevorzugt eine oder mehrere Verbindungen mit einer oder mehreren Carbonylgruppen pro Molekül enthält und weiter bevorzugt ausgewählt ist aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus.

9. Bindemittelsystem gemäß einem der Ansprüche 1 bis 5, wobei das Bindemittelsystem ein Gemisch ist umfassend
(a) das Phenolharz aus der Gruppe der Novolake
und
(b) das Vernetzungsmittel,
wobei das Massenverhältnis des Phenolharzes aus der Gruppe der Novolake zum Vernetzungsmittel bevorzugt im Bereich von 1:2 bis 99:1 liegt,
wobei bevorzugt
das Vernetzungsmittel ein Epoxid mit zwei oder mehr Epoxidgruppen pro Molekül ist und das Massenverhältnis des Phenolharzes aus der Gruppe der Novolake zu Epoxid mit zwei oder mehr Epoxidgruppen pro Molekül im Bereich von 2,5:1 bis 8,5:1 liegt, oder
das Vernetzungsmittel Hexamethylentetramin ist und das Massenverhältnis des Phenolharzes aus der Gruppe der Novolake zu Hexamethylentetramin im Bereich von 9:1 bis 99:1 liegt, oder
das Vernetzungsmittel ein Isocyanat ist und das Massenverhältnis des Phenolharzes aus der Gruppe der Novolake zu Isocyanat im Bereich von 1:2 bis 4:1 liegt.

10. Bindemittelsystem gemäß Anspruch 9, wobei das Gemisch das Phenolharz aus der Gruppe der Novolake in fester Form enthält.

11. Bindemittelsystem gemäß Anspruch 9, wobei das Gemisch
(a) das Phenolharz aus der Gruppe der Novolake
und
(b) das Vernetzungsmittel ausgewählt aus der Gruppe bestehend aus Epoxiden mit zwei oder mehr Epoxidgruppen pro Molekül, Hexamethylentetramin und Estern von Carbonsäuren
in einem Lösungsmittel umfasst,
wobei bevorzugt
die Konzentration des Phenolharzes aus der Gruppe der Novolake im Bereich von 3 Gew% bis 20 Gew% liegt,
und/oder
die Konzentration des Vernetzungsmittels aus der Gruppe bestehend aus Epoxiden mit zwei oder mehr Epoxidgruppen pro Molekül, Hexamethylentetramin und Estern von Carbonsäuren im Bereich von 0,05 Gew% bis 7 Gew% liegt,
jeweils bezogen auf die Gesamtmasse des Bindemittelsystems.

12. Bindemittelsystem gemäß Anspruch 11, wobei das Lösungsmittel einen Flammpunkt von 25 °C oder mehr und einen Siedepunkt im Bereich von 25 °C bis 200 °C hat, wobei das Lösungsmittel bevorzugt eine oder mehrere Verbindungen mit einer oder mehreren Carbonylgruppen pro Molekül enthält und weiter bevorzugt ausgewählt ist aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus.

13. Bindemittelsystem gemäß einem der vorhergehenden Ansprüche,
wobei das Vernetzungsmittel ausgewählt ist aus der Gruppe der Polyethylenglykol-Diglycidylether (PEG-DGE) mit
- einem Zahlenmittel *Mₙ* der Molmasse im Bereich von 400 g/mol bis 900g/mol, und/oder
- einem Massenmittel *M*_{w} der Molmasse im Bereich von 500 g/mol bis 1300 g/mol,
und/oder
- einer Polydispersität *Ð* = *M*_{w}/*Mₙ* im Bereich von 1,05 bis 1,75.

14. Mischung zur Herstellung einer Elektrode für eine elektrochemische Zelle, wobei die Mischung umfasst:
ein Bindemittelsystem wie in einem der Ansprüche 1 bis 13 definiert
sowie
(c) ein elektrochemisch aktives Material
wobei das Massenverhältnis des elektrochemisch aktiven Materials zum Phenolharz aus der Gruppe der Novolake im Bereich von 18:1 bis 300:1 liegt,
sowie optional
(d) ein elektrochemisch inaktives elektronisch leitfähiges Material, wobei das elektrochemisch inaktive elektronisch leitfähige Material bevorzugt ausgewählt ist aus der Gruppe bestehend aus Kohlenstoff-Nanofasern, Kohlenstoff-Nanotubes, Graphen, Carbon Black, Ruß, Acetylenruß, Ketjenblack, Graphit, Koks und Graphenoxid,
wobei das Massenverhältnis des Phenolharzes aus der Gruppe der Novolake zum elektrochemisch inaktiven elektronisch leitfähigen Material im Bereich von 0,5 bis 5,0 liegt.

15. Mischung gemäß Anspruch 14, wobei die Mischung eine Feststoffmischung ist
wobei der Anteil an Phenolharz aus der Gruppe der Novolake 0,3 Gew% bis 4 Gew% beträgt, bezogen auf die Gesamtmasse der Mischung,
und/oder
wobei der Gesamtanteil an Phenolharz aus der Gruppe der Novolake und Vernetzungsmittel 0,5 Gew% bis 5 Gew% beträgt, bezogen auf die Gesamtmasse der Mischung.

16. Mischung gemäß Anspruch 14, wobei die Mischung eine Suspension ist umfassend eine Trägerflüssigkeit,
wobei die Trägerflüssigkeit einen Flammpunkt von 25 °C oder mehr und einen Siedepunkt im Bereich von 25 °C bis 200 °C hat;
wobei die Trägerflüssigkeit eine oder mehrere Verbindungen mit einer oder mehreren Carbonylgruppen pro Molekül enthält und weiter bevorzugt ausgewählt ist aus der Gruppe bestehend aus Cyclohexanon, Cyclopentanon, 4-Heptanon, 2-Nonanon, n-Butylacetat, Dimethylcarbonat, Diethylmalonat, Dimethylsuccinat und Mischungen daraus,
wobei der Anteil an Trägerflüssigkeit 10 Gew% bis 35 Gew% beträgt, bezogen auf die Gesamtmasse der Suspension.

17. Mischung gemäß Anspruche 16, wobei der Anteil an Phenolharz aus der Gruppe der Novolake 0,3 Gew% bis 4 Gew% beträgt, bezogen auf die Gesamtmasse der Mischung abzüglich der Masse der Trägerflüssigkeit,
und/oder
wobei der Gesamtanteil an Phenolharz aus der Gruppe der Novolake und Vernetzungsmittel 0,5 Gew% bis 5 Gew% beträgt, bezogen auf die Gesamtmasse der Mischung abzüglich der Masse der Trägerflüssigkeit.

18. Elektrode für eine elektrochemische Zelle, umfassend
einen Stromabnehmer,
und eine auf einer Oberfläche des Stromabnehmers angeordnete Aktivschicht umfassend
- das Produkt einer Vernetzungsreaktion zwischen dem Phenolharz aus der Gruppe der Novolake und dem Vernetzungsmittel eines Bindemittelsystems wie in einem der Ansprüche 1 bis 13 definiert,
sowie
(c) ein elektrochemisch aktives Material,
und optional
(d) ein elektrochemisch inaktives elektronisch leitfähiges Material.

19. Elektrode gemäß Anspruch 18, wobei der Anteil des Produkts der Vernetzungsreaktion zwischen dem Phenolharz aus der Gruppe der Novolake und dem Vernetzungsmittel des Bindemittelsystems wie in einem der Ansprüche 1 bis 12 definiert 0,5 Gew% bis 5 Gew% beträgt, bezogen auf die Gesamtmasse der Aktivschicht.

20. Verfahren zur Herstellung einer Elektrode für eine elektrochemische Zelle, umfassend die Schritte
(i) Bereitstellen einer Mischung gemäß einem der Ansprüche 14 bis 17,
(ii) Vernetzungsreaktion zwischen dem Phenolharz aus der Gruppe der Novolake und dem Vernetzungsmittel des in der Mischung enthaltenen Bindemittelsystems, wobei eine Aktivschicht enthaltend das Produkt der Vernetzungsreaktion zwischen dem Phenolharz aus der Gruppe der Novolake und dem Vernetzungsmittel des Bindemittelsystems resultiert,
(iii) optional Kalandrieren der in Schritt (ii) resultierenden Aktivschicht.

21. Verfahren gemäß Anspruch 20, umfassend die Schritte
(i) Bereitstellen einer Feststoffmischung gemäß Anspruch 15,
(ii) Auftragen der in Schritt (i) bereitgestellten Feststoffmischung auf die Oberfläche eines Stromabnehmers und Vernetzungsreaktion zwischen dem Phenolharz aus der Gruppe der Novolake und dem Vernetzungsmittel des in der Feststoffmischung enthaltenen Bindemittelsystems, wobei eine Aktivschicht enthaltend das Produkt der Vernetzungsreaktion zwischen dem Phenolharz aus der Gruppe der Novolake und dem Vernetzungsmittel des erfindungsgemäßen Bindemittelsystems resultiert,
(iii) optional Kalandrieren der in Schritt (ii) resultierenden Aktivschicht.

22. Verfahren gemäß Anspruch 20, umfassend die Schritte
(i) Bereitstellen einer Mischung in Form einer Suspension gemäß Anspruch 16 oder 17,
(ii) Auftragen der in Schritt (i) bereitgestellten Suspension auf die Oberfläche eines Stromabnehmers und Vernetzungsreaktion zwischen dem Phenolharz aus der Gruppe der Novolake und dem Vernetzungsmittel des in der Suspension enthaltenen Bindemittelsystems, wobei eine Aktivschicht enthaltend das Produkt der Vernetzungsreaktion zwischen dem Phenolharz aus der Gruppe der Novolake und dem Vernetzungsmittel des Bindemittelsystems resultiert,
(iii) optional Kalandrieren der in Schritt (ii) resultierenden Aktivschicht.

23. Verfahren gemäß einem der Ansprüche 20 bis 22, wobei die Vernetzungsreaktion zwischen dem Phenolharz aus der Gruppe der Novolake und dem Vernetzungsmittel des Bindemittelsystems in Schritt (ii) thermisch induziert wird.

24. Verfahren nach einem der Ansprüche 20 bis 23, wobei eine Aktivschicht gebildet wird mit
einer flächenbezogenen Masse im Bereich von 8 mg/cm² bis 40 mg/cm²,
und/oder
einer Dichte im Bereich von 1,0 g/cm³ bis 4,0 g/cm³.
